# EUROPEAN PATENT APPLICATION

(11) **EP 4 525 187 A1**
(43) Date of publication of application: **19.03.2025**
(21) Application number: 22949134.5
(22) Date of filing: 09.12.2022
(51) Int. Cl.: H01M 50/503, H01M 50/516, H01M 50/588

(54) **BATTERY CELL, BATTERY AND ELECTRIC APPARATUS**

(30) Priority: 30.06.2022 WO PCT/CN2022/103107
(71) Applicant: Contemporary Amperex Technology (Hong Kong) Limited, Hong Kong (HK)
(72) Inventor: LI, Lingyu, Ningde City, Fujian 352100 (CN); LIN, Denghua, Ningde City, Fujian 352100 (CN)
(74) Representative: Gong, Jinping
(86) International application number: PCT/CN2022/138044
(87) International publication number: WO 2024/001058

(57) **Abstract**

The embodiment of the present disclosure provides a battery cell, a battery, and an electrical equipment. The battery cell includes: a shell with a first wall; an electrode assembly, arranged inside the shell; and an electrode leading-out component, installed on the first wall for leading out electrical energy from the electrode assembly, wherein the electrode leading-out component includes a first surface, wherein the plane of the first surface intersects with the first wall, and the first surface is used to connect with the busbar component. The battery composed of battery cells has a higher assembly efficiency.

## Description

### Cross-Reference to Related Application

The present disclosure claims priority to International Patent Application PCT/CN2022/103107, filed on June 30, 2022, entitled "Battery Cell, Battery and Electrical Equipment", which is incorporated herein by reference in its entirety.

### Technical Field

The present disclosure relates to the field of battery, in particular to a battery cell, a battery, and an electrical equipment.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

The assembly efficiency of batteries is an issue that cannot be ignored in the manufacturing process of batteries. Therefore, how to improve the assembly efficiency of batteries is an urgent technical problem that needs to be solved in battery technology.

### Summary

The present disclosure aims at providing a battery cell, a battery, and an electrical equipment. The battery composed of battery cells has a higher assembly efficiency.

The present disclosure is implemented through the following technical solution.

In the first aspect, the present disclosure provides a battery cell, comprising: a shell with a first wall; an electrode assembly, arranged inside the shell; and an electrode leading-out component, installed on the first wall for leading out electrical energy from the electrode assembly, wherein the electrode leading-out component includes a first surface, wherein the plane of the first surface intersects with the first wall, and the first surface is used to connect with the busbar component.

According to the battery cell of the embodiment of the present disclosure, the plane where the first surface is located intersects with the first wall to facilitate the welding of the busbar component and the electrode leading-out component, thereby improving the assembly efficiency of the battery composed of the battery cells.

According to some embodiments of the present disclosure, the electrode leading-out component also includes a second surface, wherein the plane of the second surface intersects with the first surface. The area of the second surface is D1, and the area of the first surface is D2, which meet 0.1 ≤ D2/D1 ≤ 10.

In the above solution, the ratio of the area D2 of the first surface to the area D1 of the second surface satisfies the above relationship, which can take into account both the energy density and overcurrent area of the battery. When D2/D1 is less than 0.1, if D2 is too small, the welding area between the busbar component and the electrode leading-out component is too small, which affects the overcurrent capacity; or if D1 is too large, the electrode leading-out component will occupy too much area in the direction perpendicular to the thickness direction of the first wall, thereby occupying the space of the electrode assembly and affecting the energy density. When 10<D2/D1, if D2 is too large, the space occupied by the electrode leading-out component in the thickness direction of the first wall is too large, which affects the energy density; or if D1 is too small, the connection area between the electrical connection components (such as electrode terminals) between the tab and the electrode leading-out component, and the electrode leading-out component is too small, which affects the overcurrent capacity.

According to some embodiments of the present disclosure, 0.5 ≤ D2/D1 ≤ 2.

In the above solution, when the ratio of the area D2 of the first surface to the area D1 of the second surface meets 0.5 ≤ D2/D1 ≤ 2, compared to 0.1 ≤ D2/D1 < 0.5 and 2 < D2/D1 ≤ 10, the welding area between the electrode leading-out component and the busbar component, as well as the welding area between the electrode leading-out component and the electrode terminal, can be further guaranteed. The overcurrent capacity is better, and the area occupied by the electrode leading-out component is smaller, thereby resulting in a higher energy density of the battery.

According to some embodiments of the present disclosure, along the thickness direction of the first wall, the size of the first surface is W1, which meets 1mm ≤ W1 ≤ 10mm, preferably 2mm ≤ W1 ≤ 5mm.

In the above solution, along the thickness direction of the first wall, the size W1 of the first surface satisfies the above relationship, thereby allowing for a larger connection area between the first surface and the busbar component, so as to facilitate the connection between the first surface and the busbar component.

According to some embodiments of the present disclosure, the electrode leading-out component also includes a second surface, wherein the plane of the second surface intersects with the first surface; the electrode leading-out component is arranged on the side of the first wall that is away from the inside of the battery cell; and the electrode leading-out component includes a first part and a second part, wherein the first part is electrically connected to the tab of the electrode assembly, the second part is used to connect the busbar component, the second surface is the surface of the first part away from the first wall, and the first surface is the surface of the second part.

In the above solution, the electrode leading-out component is arranged on the side of the first wall that is away from the inside of the battery cell, so as to facilitate the connection between the electrode leading-out component and the busbar component. The first and second parts are respectively used to achieve the connection with the tab and the busbar component, which is conducive to improving the connection area between the electrode leading-out component and the electrode terminal, as well as the connection area between the electrode leading-out component and the busbar component.

According to some embodiments of the present disclosure, the battery cell further comprises an electrode terminal, wherein the first wall is provided with an electrode leading-out hole, one end of the electrode terminal is connected to the first part, and the other end is electrically connected to the tab of the electrode assembly through the electrode leading-out hole.

In the above solution, the first part is electrically connected to the tab of the electrode assembly through the electrode terminal to guide the electrical energy of the electrode assembly to the electrode leading-out component, so that the electrode leading-out component leads out the electrical energy of the electrode assembly.

According to some embodiments of the present disclosure, at least part of the second part extends beyond the first part along the thickness direction of the first wall.

In the above solution, at least part of the second part extends beyond the first part to increase the area of the first surface, thereby facilitating the connection between the second part and the busbar component and increasing the connection area.

According to some embodiments of the present disclosure, the first part and the second part are arranged in a first direction, the first surface is the surface of the second part that is away from the first part along the first direction, and the first direction is perpendicular to the thickness direction of the first wall.

In the above solution, the first and second parts are arranged along the first direction, and the first surface is the surface of the second part that is away from the first part along the first direction, thereby facilitating the assembly of the electrode leading-out component and the busbar component.

According to some embodiments of the present disclosure, the first part is parallel to the first wall.

In the above solution, the first part is parallel to the first wall, thereby facilitating the assembly of the first part.

According to some embodiments of the present disclosure, at least part of the second part extends in a direction away from the first wall and beyond the second surface.

In the above solution, at least part of the second part extends beyond the second surface, so that at least part of the second part is located on the side of the second surface away from the first wall, so as to reduce interference with the first wall when the second part is connected to the busbar component.

According to some embodiments of the present disclosure, the electrode leading-out component also includes a third part, which connects the first part and the second part.

In the above solution, the third part connects the first and second parts, so that there can be a certain distance between the first and second parts to facilitate the connection between the electrode leading-out component and the busbar component.

According to some embodiments of the present disclosure, the third part includes a first section and a second section, wherein the first section extends from the first part in a direction away from the first wall, the second section connects the first section and the second part, and a gap is provided between the first section and the second part.

In the above solution, a gap is provided between the first section and the second part to facilitate the deformation of the electrode leading-out component to absorb the expansion stress generated by the expansion of the battery cell.

According to some embodiments of the present disclosure, the second part extends from the second section towards the direction near the first wall, and the first section, the second section, and the second part form a U-shaped structure.

In the above solution, the first section, the second section, and the second part form a U-shaped structure, which is simple in structure and easy to shape.

According to some embodiments of the present disclosure, the battery cell further includes a support member, inserted into the gap.

In the above solution, the support member is inserted in the gap, and can support the second part when the busbar component is connected to the second part, thereby facilitating the connection between the second part and the busbar component.

According to some embodiments of the present disclosure, the opposite two sides of the support member contact with the first section and the second part, respectively.

In the above solution, the support member is in contact with the first section and the second part, and the support member can play a limiting role in limiting the position and movement of the second part, so as to facilitate the stable connection between the second part and the busbar component.

According to some embodiments of the present disclosure, the support member is made of insulating material, and along the second direction, the support member extends beyond both ends of the third part, wherein the second direction is perpendicular to the thickness direction of the first wall and parallel to the first surface.

In the above solution, the support member is made of insulating material and extends beyond the two ends of the third part, which has a good insulation effect.

According to some embodiments of the present disclosure, the battery cell further includes: a first insulating member, at least partially arranged between the first wall and the first part to insulate and isolate the first wall and the first part.

In the above solution, at least part of the first insulating member is arranged between the first wall and the first part to separate the first wall and the first part, thereby improving the safety of the battery cell.

According to some embodiments of the present disclosure, the support member is connected to the first insulating member.

In the above solution, the support member is connected to the first insulating member, thereby ensuring stable connection between the support member and the first insulating member, so as to facilitate the support member supporting the second part.

According to some embodiments of the present disclosure, along the second direction, the first insulating member extends beyond both ends of the first part, wherein the second direction is perpendicular to the thickness direction of the first wall and parallel to the first surface.

In the above solution, the first insulating member extends beyond the two ends of the first part to achieve a good insulation effect between the first part and the first wall.

According to some embodiments of the present disclosure, the battery cell further comprises a second insulating member, at least partially arranged between the second part and the first wall to insulate and isolate the second part from the first wall.

In the above solution, a second insulating member is arranged between the second part and the first wall to insulate and isolate the second part from the first wall, thereby improving the safety of the battery cell.

According to some embodiments of the present disclosure, the second insulating member is connected to the first insulating member.

In the above solution, the second insulating member is connected to the first insulating member, such that the connection between the second insulating member and the first insulating member is stable. The two members can be formed integrally for easy assembly and positioning.

According to some embodiments of the present disclosure, the end of the second part that is away from the second section abuts against the second insulating member.

In the above solution, the end of the second part that is away from the second section abuts against the second insulating member, which can limit the movement of the second insulating member along the thickness direction of the first wall.

According to some embodiments of the present disclosure, along the second direction, the second insulating member extends beyond both ends of the second part, wherein the second direction is perpendicular to the thickness direction of the first wall and parallel to the first surface.

In the above solution, the second insulating member extends beyond the two ends of the second part in the second direction to achieve a good insulation effect between the second part and the first wall.

According to some embodiments of the present disclosure, the thickness of the first part is greater than the thickness of the third part, and/or the thickness of the second part is greater than the thickness of the third part.

In the above solution, in embodiments where the thickness of the first part is greater than that of the third part, the strength of the first part can be enhanced, and the risk of welding through the first part during the welding between the first part and the electrical connection components (such as electrode terminals) between the tab and the electrode leading-out component can be reduced to meet the welding requirements. In embodiments where the thickness of the second part is greater than that of the third part, the risk of welding through the second part during welding between the second part and the busbar component can be reduced to meet the welding requirements. In embodiments where the thickness of the first part is greater than that of the third part, and the thickness of the second part is greater than that of the third part, both the first and second parts have thicker thicknesses, which can meet welding requirements and reduce the risk of the first and second parts being welded through.

According to some embodiments of the present disclosure, the first part, the third part, and the second part are arranged in sequence along the first direction, wherein the size of the third part along the second direction is greater than the size of the first part along the second direction, and the size of the third part along the second direction is greater than the size of the second part along the second direction, wherein the first direction, the second direction and the thickness direction of the first wall are perpendicular to each other.

In the above solution, due to the smaller thickness of the third part, along the second direction, compared to the first and second parts, the third part has the largest size, which can enable the third part to have a larger overcurrent area to meet the overcurrent demand.

According to some embodiments of the present disclosure, the overcurrent sectional area of the first part is S1, the overcurrent sectional area of the third part is S2, and the overcurrent sectional area of the second part is S3, wherein 0.2 ≤ S1/S2 ≤ 5, 0.2 ≤ S2/S3 ≤ 5, and 0.2 ≤ S1/S3 ≤ 5; preferably, 0.5 ≤ S1/S2 ≤ 2, 0.5 ≤ S2/S3 ≤ 2, and 0.5 ≤ S1/S3 ≤ 2.

In the above solution, the overcurrent area S1 of the first part, the overcurrent area S2 of the second part, and the overcurrent area S3 of the third part meet the above relationship, thereby resulting in a better overcurrent capacity of the overall electrode leading-out component. When 0.5 ≤ S1/S2 ≤ 2, 0.5 ≤ S2/S3 ≤ 2, and 0.5 ≤ S1/S3 ≤ 2, the overcurrent capacity of the electrode leading-out component overall is better compared to 0.2 ≤ S1/S2 ≤ 5, 0.2 ≤ S2/S3 ≤ 5, and 0.2 ≤ S1/S3 ≤ 5.

According to some embodiments of the present disclosure, the thickness of the first part is H1, meeting 0.2mm ≤ H1 ≤ 5mm, preferably 0.5mm ≤ H1 ≤ 4mm; or the thickness of the third part is H2, meeting 0.2mm ≤ H2 ≤ 2mm, preferably 0.3mm ≤ H2 ≤ 1.2mm; or the thickness of the second part is H3, meeting 0.2mm ≤ H3 ≤ 5mm, preferably 0.5mm ≤ H3 ≤ 4mm.

In the above solution, the thickness H1 of the first part satisfies the above relationship, and under the condition that the first part has better overcurrent capacity, the first part is not easy to be welded through. The thickness H2 of the third part satisfies the above relationship, which facilitates the bending of the third part while making the third part have a larger overcurrent area. The thickness H3 of the second part satisfies the above relationship, and under the condition that the second part has better overcurrent capacity, the second part is not easy to be welded through.

According to some embodiments of the present disclosure, the battery cell further comprises: an electrode terminal, wherein the first wall is provided with an electrode leading-out hole, wherein the electrode terminal passes through the electrode leading-out hole, one end of the electrode terminal is connected to the electrode leading-out component, and the other end is electrically connected to the tab of the electrode assembly.

In the above solution, the positioning of the electrode terminal is achieved by the electrode terminal passing through the electrode leading-out hole, which facilitates the connection between the electrode terminal and the electrode leading-out component and the tab.

According to some embodiments of the present disclosure, the number of electrode terminals and the number of electrode leading-out holes are both multiple, and the electrode terminals correspond to the electrode leading-out holes one by one; and the electrode leading-out component is provided with a first groove, which is located between two adjacent electrode terminals.

In the above solution, both the number of electrode terminals and the number of electrode leading-out holes are multiple, which has a better overcurrent capacity. The first groove can reduce the weight of the electrode leading-out component without affecting overcurrent.

According to some embodiments of the present disclosure, the first groove extends to the edge of the electrode leading-out component.

In the above solution, the first groove extends to the edge of the electrode leading-out component to facilitate the processing of the first groove at the edge of the electrode leading-out component and reduce the processing difficulty.

According to some embodiments of the present disclosure, the battery cell further comprises a first insulating member, at least partially arranged between the first wall and the electrode leading-out component to insulate and isolate the first wall and the electrode leading-out component, wherein the first insulating member includes a first protrusion, which is inserted into the first groove.

In the above solution, the first wall is insulated and isolated from the electrode leading-out component by the first insulating member, so that the first wall is separated from the electrode leading-out component. The first protrusion is inserted into the first groove to facilitate the positioning of the electrode leading-out component.

According to some embodiments of the present disclosure, the first wall includes a third surface that is away from the interior of the battery cell, wherein the third surface is provided with a second protrusion, the first insulating member includes a second groove, and the second protrusion is inserted into the second groove.

In the above solution, the positioning of the first insulating member is achieved through the coordination of the second protrusion and the second groove, thereby facilitating the assembly of the first insulating member and the first wall.

According to some embodiments of the present disclosure, the electrode leading-out component extends beyond the edge of the first wall, and the first surface is located at the part of the electrode leading-out component that extends beyond the first wall.

In the above solution, the electrode leading-out component extends beyond the edge of the first wall. When observing along a direction perpendicular to the bottom wall, the projection of the first surface does not overlap with the first wall to facilitate the electrical connection between the electrode leading-out component and the busbar component.

According to some embodiments of the present disclosure, the electrode leading-out component comprises a first part and a second part, wherein the first part is electrically connected to the tab of the electrode assembly, the second part is used to connect the busbar component, the second part extends beyond the edge of the first wall, the second part extends along the thickness direction of the first wall and protrudes from the first part, and the first surface is the surface of the second part that is away from the first part.

In the above solution, as the second part is used to connect the busbar component, the second part extends beyond the edge of the first wall, and the first surface is the surface of the second part away from the first part, when the busbar component is connected to the first surface, the busbar component can have a certain distance from the first wall, thereby reducing the risk of interference between the busbar component and the first wall, and reducing the risk of short-circuit contact between the busbar component and the shell, so as to facilitate the assembly of the busbar component and the electrode leading-out component.

According to some embodiments of the present disclosure, the plane where the first surface is located is perpendicular to the first wall.

In the above solution, the plane on which the first surface is located is perpendicular to the first wall, which facilitates the electrical connection between the electrode leading-out component and the busbar component.

According to some embodiments of the present disclosure, the shell comprises a first wall and a second wall arranged oppositely in the thickness direction of the first wall, a third wall and a fourth wall arranged oppositely in the first direction, and a fifth wall and a sixth wall arranged oppositely in the second direction, wherein the area of the third wall and the area of the fourth wall are both smaller than the area of the first wall, the area of the third wall and the area of the fourth wall are both smaller than the area of the second wall, the area of the fifth wall and the area of the sixth wall are both smaller than the area of the first wall, and the area of the fifth wall and the area of the sixth wall are both smaller than the area of the second wall, wherein the thickness direction of the first wall, the first direction, and the second direction are perpendicular to each other.

According to some embodiments of the present disclosure, the shell comprises a casing and an end cover, wherein the casing has an opening, the end cover closes the opening, and the first wall is the end cover.

In the above solution, the first wall is the end cover, which facilitates the assembly of electrode leading-out component.

In the second aspect, the present disclosure provides a battery, comprising: a box; a busbar component, housed within the box; and multiple battery cells as provided in the above embodiments, accommodated within the box, wherein the multiple battery cells are stacked along the thickness direction of the first wall, and the electrode leading-out components of the multiple battery cells are electrically connected through the busbar component.

According to the battery of the embodiment of the present disclosure, the use of the aforementioned battery cell can improve the assembly efficiency of the electrode leading-out component and busbar component of the battery cell, thereby improving the assembly efficiency of the battery.

According to some embodiments of the present disclosure, in the thickness direction of the first wall, the projection of the end portion of the busbar component overlaps at least partially with the first wall.

In the above solution, the projection of the end portion of the busbar component overlaps at least partially with the first wall, so as to save assembly space, compact the structure of the internal components of the battery, and improve the energy density of the battery.

According to some embodiments of the present disclosure, the electrode leading-out component is welded to the busbar component to form a weld imprint area, wherein along the thickness direction of the first wall, the size of the first surface is W1, and the size of the weld imprint area is W2, meeting 0.01 ≤ W2/W1 ≤ 0.5, preferably 0.1 ≤ W2/W1 ≤ 0.3.

In the above solution, the ratio of the size W2 of the weld imprint area to the size W1 of the first surface satisfies the above relationship, thereby resulting in better overcurrent capacity, and higher connection strength at the welding site, and better safety of the battery cell. If the ratio of the size W2 of the weld imprint area to the size W1 of the first surface is too small, it will result in poor overcurrent capacity and insufficient connection strength at the welding site. When laser welding is carried out between the busbar component and the electrode leading-out component, if the ratio of the size W2 of the weld imprint area to the size W1 of the first surface is too large, it may cause the local welding position to exceed the second part, thereby causing the local insulation structure to be melted, and reducing the safety of the battery cell.

According to some embodiments of the present disclosure, along the second direction, the size of the first surface is F1, and the size of the weld imprint area is F2, meeting 0.01 ≤ F2/F1 ≤ 0.5, preferably 0.1 ≤ F2/F1 ≤ 0.3, wherein the second direction is perpendicular to the thickness direction of the first wall and parallel to the first surface.

In the above solution, the ratio of the size F2 of the weld imprint area in the second direction to the size F1 of the first surface in the second direction satisfies the above relationship, thereby resulting in better overcurrent capacity, and higher connection strength at the welding site, and better safety of the battery cell.

According to some embodiments of the present disclosure, the area of the first surface is M1, and the area of the weld imprint area is M2, meeting 0.01 ≤ M1/M2 ≤ 0.5, preferably 0.1 ≤ M1/M2 ≤ 0.3.

In the above solution, the ratio of the area M1 of the first surface to the area M2 of the weld imprint area satisfies the above relationship. The weld imprint part has better overcurrent capacity, and higher connection strength, and the battery cell has better safety.

According to some embodiments of the present disclosure, the busbar component comprises a bottom wall, two side walls, and two flanging parts, wherein the two side walls are arranged oppositely along the thickness direction of the first wall, and the bottom wall is connected to the two side walls; and each flanging part extends from the end of the corresponding side wall away from the bottom wall to the direction away from the other side wall, and the two flanging parts are respectively connected to the electrode leading-out components of the two battery cells.

In the above solution, the structural form of the busbar component facilitates the connection between the busbar component and the first surfaces of the electrode leading-out components of two battery cells.

According to some embodiments of the present disclosure, the shell also has a second wall arranged oppositely to the first wall, and the first area of the edge of the second wall is recessed to form a concave part, which is used to accommodate at least part of the electrode leading-out components of the battery cell adjacent to the second wall.

In the above solution, when multiple battery cells are stacked, the concave part is arranged to accommodate at least some of the electrode leading-out components of the battery cells adjacent to the second wall, thereby making reasonable use of the assembly space, so that the battery has a higher energy density.

According to some embodiments of the present disclosure, the electrode leading-out component extends beyond the edge of the first wall, the first surface is located at the part of the electrode leading-out component that extends beyond the first wall, and the busbar component is in a flat plate structure.

In the above solution, the electrode leading-out component extends beyond the edge of the first wall. When observing along a direction perpendicular to the bottom wall, the projection of the first surface does not overlap with the first wall to facilitate the electrical connection between the electrode leading-out component and the busbar component. The busbar component has a simple structure, is easy to process and manufacture, and has low manufacturing costs.

According to some embodiments of the present disclosure, the electrode leading-out component is at least partially accommodated in the concave part of the battery cell adjacent to the first wall; the electrode leading-out component includes a first part and a second part, wherein the first part is electrically connected to the tab of the electrode assembly, the second part is used to connect the busbar component, the second part extends beyond the edge of the first wall, the second part extends along the thickness direction of the first wall and protrudes from the first part, the first surface is the surface of the second part that is away from the first part, and in a direction pointing towards the electrode leading-out component along the first wall, the second part extends beyond the concave part of the battery cell adjacent to the first wall; and/or, the shell includes a casing and an end cover, wherein the casing has an opening, the end cover closes the opening, the first wall is the end cover, and in a direction perpendicular to the first surface, the projection of the second part overlaps partially with the projection of the casing.

In the above solution, the electrode leading-out component is at least partially accommodated in the concave part of the battery cell adjacent to the first wall, and the second part extends beyond the concave part of the adjacent battery cell. Therefore, the first surface can have a larger size in the thickness direction of the first wall, so that the electrode leading-out component has a larger connection area with the first surface, thereby firmly connecting the electrode leading-out component with the busbar component. In the direction perpendicular to the first surface, the projection of the second part overlaps partially with the projection of the casing, thereby resulting in a larger size of the second part in the arrangement direction of the end cover and the casing, thereby resulting in a larger area of the first surface in the arrangement direction of the end cover and the casing, so as to make a larger connection area between the busbar component and the electrode leading-out component, and thus to firmly connect the busbar component and the electrode leading-out component.

According to some embodiments of the present disclosure, the battery further includes an isolation layer, which is arranged on the surface of the electrode leading-out component facing the shell, wherein the isolation layer is used to insulate and isolate the electrode leading-out component from the shell.

In the above solution, the setting of the isolation layer is used to insulate and isolate the electrode leading-out component from the shell of the adjacent battery cell, or the shell of the battery cell provided with the electrode leading-out component, so as to improve the safety of the battery.

According to some embodiments of the present disclosure, along the thickness direction of the first wall, the two adjacent electrode leading-out component of the two adjacent battery cells have two opposite end portions, and the two ends of the busbar component are flush with the two end portions, respectively; and/or, along the second direction, the two opposite ends of the busbar component are flush with the two opposite ends of the electrode leading-out component, respectively, and the second direction, the thickness direction of the first wall, and the thickness direction of the busbar component are perpendicular to each other.

In the above solution, the two ends of the busbar component in the thickness direction of the first wall are respectively flush with the two opposite end portions of the two adjacent electrode leading-out components of the two adjacent battery cells, so as to facilitate the positioning of the busbar component and the corresponding electrode leading-out component in the thickness direction of the first wall, and to facilitate the connection between the busbar component and the electrode leading-out component. The two opposite ends of the busbar component along the second direction are respectively flush with the two opposite ends of the electrode leading-out component along the second direction, so as to facilitate the positioning of the busbar component and the corresponding electrode leading-out component in the second direction, and to facilitate the connection between the busbar component and the electrode leading-out component.

In the third aspect, the present disclosure provides an electrical equipment, including a battery cell provided in any of the above embodiments, which is used to provide electrical energy.

The above description is only an overview of the technical solution of the present disclosure. In order to have a clearer understanding of the technical means of the present disclosure, it can be implemented according to the content of the specification. In order to make the above and other purposes, features, and advantages of the present disclosure more obvious and understandable, the specific implementation methods of the present disclosure are hereby listed.

### Brief Description of Drawings

In order to more clearly illustrate technical solutions of embodiments of the present disclosure, drawings required for use in the embodiments of the present disclosure will be described briefly below. It is obvious that the drawings in the following description are merely illustrative of some embodiments of the present disclosure. It will be understood by those of ordinary skill in the art that other drawings can also be obtained according to the drawings without any inventive effort.
FIG. 1 is a schematic view of the structure of the vehicle provided in some embodiments of the present disclosure;
FIG. 2 is an exploded view of the battery provided in some embodiments of the present disclosure;
FIG. 3 is an exploded view of the battery cell provided in some embodiments of the present disclosure;
FIG. 4 is a stereogram of the electrode leading-out component provided in some embodiments of the present disclosure;
FIG. 5 is an assembly schematic view of the electrode leading-out component and the first wall provided in some embodiments of the present disclosure;
FIG. 6 is a structural schematic view of the electrode leading-out component provided in some embodiments of the present disclosure;
FIG. 7 is a structural schematic view of the electrode leading-out component provided in some embodiments of the present disclosure;
FIG. 8 is a structural schematic view of the electrode leading-out component provided in some other embodiments of the present disclosure;
FIG. 9 is a structural schematic view of the electrode leading-out component provided in some other embodiments of the present disclosure;
FIG. 10 is a structural schematic view of the electrode leading-out component provided in some other embodiments of the present disclosure;
FIG. 11 is a structural schematic view of the support member, first insulating member, and second insulating member provided in some embodiments of the present disclosure;
FIG. 12 is a sectional view of partial structure of the battery cell provided in some embodiments of the present disclosure;
FIG. 13 is a side view of the electrode leading-out component provided in some other embodiments of the present disclosure;
FIG. 14 is a top view of FIG. 13;
FIG. 15 is a schematic view of the overcurrent section of the first part provided in some embodiments of the present disclosure;
FIG. 16 is a schematic view of the overcurrent section of the third part provided in some embodiments of the present disclosure;
FIG. 17 is a schematic view of the overcurrent section of the second part provided in some embodiments of the present disclosure;
FIG. 18 is a sectional view of the battery cell provided in some embodiments of the present disclosure;
FIG. 19 is a partial enlarged view of part A of FIG. 18;
FIG. 20 is a partial enlarged view of part B of FIG. 2;
FIG. 21 is a structural schematic view of the reflow component provided in some embodiments of the present disclosure; and
FIG. 22 is a schematic view of partial structure of the battery provided in some embodiments of the present disclosure.

In the drawings, they are not drawn to the actual scale.

Reference signs: 100-battery; 10-box; 11-first sub-box; 12-second sub-box; 20-battery cell; 21-shell; 211-casing; 212-end cover; 213-first wall; 213a-third surface; 2131-electrode leading-out hole; 2132-second protrusion; 214-second wall; 2141-concave part; 215-third wall; 22-electrode assembly; 221-tab; 23-electrode leading-out component; 23a-second surface; 23b-first surface; 23c-fifth surface; 23d-side; 231-first part; 232-second part; 233-third part; 2331-first section; 2332-second section; 234-first groove; 235-first through hole; 241-support member; 242-first insulating member; 242a-sixth surface; 242b-seventh surface; 2421-first protrusion; 2422-second groove; 2423-second through hole; 243-second insulating member; 25-electrode terminal; 26-adapter; 27-third insulating member; 30-busbar component; 31-bottom wall; 32-side wall; 33-flanging part; 40-isolation layer; P-weld imprint area; 200-controller; 300-motor; and 1000-vehicle.

### Detailed Description of Embodiments

The following will provide a further detailed description of the implementation method of the present disclosure in conjunction with the accompanying drawings and embodiments. The detailed description of the following embodiments and accompanying drawings are used to exemplify the principles of the present disclosure, but cannot be used to limit the scope of the present disclosure, that is, the present disclosure is not limited to the described embodiments.

Unless otherwise defined, all technical and scientific terms used in the present disclosure have the same meanings as those commonly understood by those skilled in the art to which the present disclosure belongs. The terms used in the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first", "second", etc. are only used to distinguish different objects and cannot be understood as indicating or implying relative importance or implying the quantity, specific order, or primary and secondary relationship of the indicated technical features. In the description of the embodiments of the present disclosure, the meaning of "multiple" refers to two or more, unless otherwise expressly specified.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

The term "multiple (a plurality of)" in the description of the embodiments of the present disclosure refers to two or more (including two).

In the description of embodiments of the present disclosure, the orientation or positional relationship indicated by the technical terms "length", "width", "thickness", "inside", "outside", "circumferential" is based on the orientation or positional relationship shown in the drawings, and they are only for facilitating describing the embodiments of the present disclosure and simplifying the description, rather than indicating or implying that the related apparatus or element must be in a specific orientation, or constructed or operated in a specific orientation, and therefore it cannot be understood as a limitation to the embodiments of the present disclosure.

In the description of the embodiments of the present disclosure, unless otherwise clearly stipulated and limited, the technical terms "mount", "interconnect", "connect" and "fix" should be understood in a broad sense, for example, it can be a fixed connection, a detachable connection, or an integral connection; it can be mechanical connection or electrical connection; and it can be a direct connection, an indirect connection through an intermediary, or an internal communication or interactive relationship between two components. For those of ordinary skill in the art, the specific meaning of the foregoing terms in the embodiments of the present disclosure may be understood according to specific circumstances.

The battery cell includes an electrode assembly and an electrolyte, and the electrode assembly is composed of a positive electrode plate, a negative electrode plate, and a separator. Battery cells mainly rely on metal ions moving between the positive and negative electrode plates to operate. The positive electrode plate includes a positive electrode current collector and a positive electrode active substance layer. The positive electrode active substance layer is coated on the surface of the positive electrode current collector. The current collector without the positive electrode active substance layer is used as the positive electrode tab. Taking lithium ion batteries as an example, the material for the positive electrode current collector can be aluminum, and the active substance of the positive electrode can be lithium cobalt oxide (lithium cobaltate), lithium iron phosphate, ternary lithium, or lithium manganese oxide (lithium manganate). The negative electrode plate includes a negative electrode current collector and a negative electrode active substance layer. The negative electrode active substance layer is coated on the surface of the negative electrode current collector. The current collector without the negative electrode active substance layer is used as the negative electrode tab. The material for the negative electrode current collector can be copper, and the active substance of the negative electrode can be carbon, silicon or the like. In order to ensure that fusing does not occur under a high current, multiple positive electrode tabs are provided and stacked together, and multiple negative electrode tabs are provided and stacked together. The material of the separator can be PP (polypropylene) or PE (polyethylene), etc.

The battery cell also includes a shell, electrode terminals, and an electrode leading-out component. The shell includes a casing and an end cover, the casing has an opening, the end cover closes the opening, and the electrode assembly is arranged inside the casing. The electrode terminal passes through the end cover, the tab of the electrode assembly is connected to one end of the electrode terminal, and the electrode leading-out component is connected to the other end of the electrode terminal. The electrode leading-out component is used to lead out the electrical energy of the battery cell. The electrode leading-out component is equipped with a through hole for the electrode terminal to pass through, and the electrode terminal is passed through the through hole and riveted to the electrode leading-out component.

The development of battery technology needs to consider multiple design factors simultaneously, such as energy density, discharge capacity, charging and discharging rate, and other performance parameters. In addition, it is also necessary to consider the assembly efficiency of the battery.

In the prior art, the assembly efficiency of batteries is relatively low, which affects the mass production of batteries. The inventor studied and found that in the production process of batteries, the busbar component is usually welded to the end face of the electrode leading-out component away from the end cover (i.e., the second surface mentioned below), and the end face causes the inconvenience of welding between the busbar component and the electrode leading-out component, such that the assembly process between multiple battery cells is complex, thereby resulting in low assembly efficiency of the battery.

In view of this, in order to solve the problem of low assembly efficiency of the battery caused by the low assembly efficiency of the busbar component and the electrode leading-out component, the inventor has conducted in-depth research and designed a battery cell. The plane where the surface connecting the electrode leading-out component and the busbar component is located intersects with the first wall to facilitate the welding of the busbar component and the electrode leading-out component, thereby improving the assembly efficiency of the battery composed of the battery cells.

The battery cell disclosed in the embodiments of the present disclosure can be used in, but is not limited to, electrical equipment such as vehicles, ships, or aircraft. The battery cell, battery, etc. disclosed in the present disclosure can be used to form the power supply system of the electrical equipment.

The embodiment of the present disclosure provides an electrical equipment using a battery as a power source, which can be but is not limited to mobile phones, tablet computers, laptops, electric toys, electric tools, electric bicycles, electric motorcycles, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present disclosure being the vehicle 1000 as an example to explain.

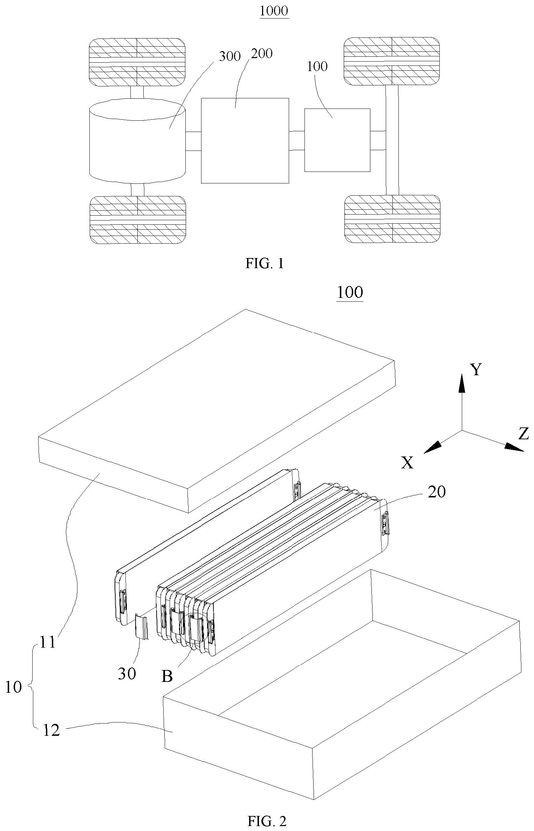

Referring to FIG. 1, FIG. 1 is a structural schematic view of the vehicle provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000, and be used for the electrical system of the vehicle 1000, such as for the working power demand during startup, navigation, and operation of the vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

Referring to FIG. 2, FIG. 2 is an explosion view of the battery provided in some embodiments of the present disclosure. The battery 100 includes a box 10 and a battery cell 20, which is accommodated within the box 10. In the above, the box 10 is used to provide accommodating space for the battery cell 20, and the box 10 can be of various structures. In some embodiments, the box 10 may include a first sub-box 11 and a second sub-box 12, with the first sub-box 11 and the second sub-box 12 covering each other. The first sub-box 11 and the second sub-box 12 jointly define a storage space for accommodating the battery cell 20. The second sub-box 12 can be in a hollow structure with an opening at one end, the first sub-box 11 can be in a plate-shaped structure, and the first sub-box 11 is covered on the opening side of the second sub-box 12 to jointly define the storage space by the first sub-box 11 and the second sub-box 12. The first sub-box 11 and the second sub-box 12 can also both be in hollow structure with an opening on one side, and the opening side of the first sub-box 11 is covered on the opening side of the second sub-box 12.

In the battery 100, the battery cells 20 can be multiple, and multiple battery cells 20 can be connected in series, parallel, or hybrid. Hybrid connection means that both series connection and parallel connection exist among multiple battery cells 20. Multiple battery cells 20 can be directly connected in series, parallel, or hybrid together, and then the whole composed of multiple battery cells 20 can be accommodated in the box 10. Of course, the battery 100 can also be in the form of a battery module composed of multiple battery cells 20 that are first connected in series, parallel, or hybrid. Multiple battery modules are then connected in series, parallel, or hybrid to form a whole and accommodated in the box 10. The battery 100 may also include other structures, for example, the battery 100 may also include a busbar component 30 for achieving electrical connection between multiple battery cells 20.

In the above, battery cell 20 can be a secondary battery or a primary battery; and can also be a lithium sulfur battery, sodium ion battery, or magnesium ion battery, but is not limited thereto.

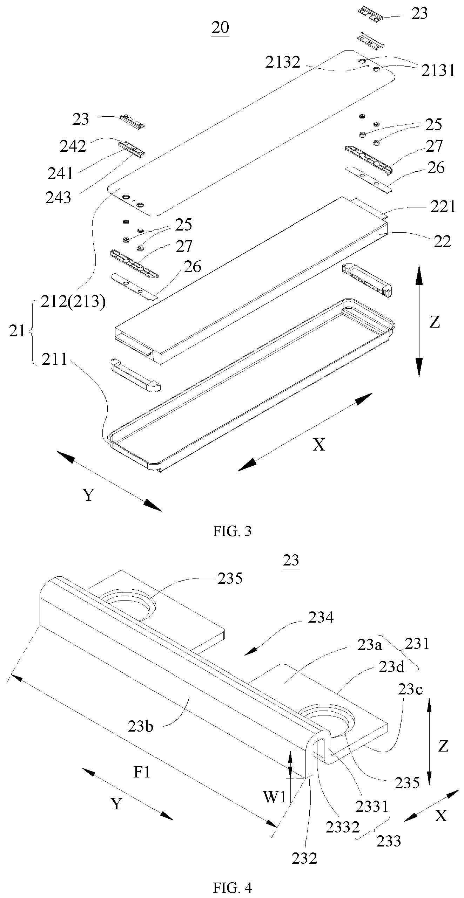

Referring to FIG. 3, FIG. 3 is an explosion view of the battery cell provided in some embodiments of the present disclosure. As shown in FIG. 3, the battery cell 20 includes a shell 21, an electrode assembly 22, an electrode leading-out component 23, and an electrode terminal 25. The shell 21 includes a casing 211 and an end cover 212, the casing 211 has an opening and the end cover 212 closes the opening to isolate the internal environment of the battery cell 20 from the external environment.

The casing 211 is a component used to cooperate with the end cover 212 to form an internal environment of the battery cell 20, wherein the formed internal environment can be used to accommodate the electrode assembly 22, electrolyte, and other components. The casing 211 and end cover 212 can be independent components. The casing 211 can be of various shapes and sizes. Specifically, the shape of casing 211 can be determined based on the specific shape and size of electrode assembly 22. The material of casing 211 can be various, such as copper, iron, aluminum, stainless steel, aluminum alloy, plastic, etc. The embodiments of the present disclosure do not make special limitations on this. The embodiment of the present disclosure takes the casing 211 as a cuboid as an example.

The end cover 212 refers to a component that covers the opening of the casing 211 to isolate the internal environment of the battery cell 20 from the external environment. Without limitation, the shape of the end cover 212 can adapt to the shape of the casing 211 to fit the casing 211. Optionally, the end cover 212 can be made of a material with a certain hardness and strength (such as aluminum alloy), so that the end cover 212 is less prone to deformation when subjected to compression and collision, thereby enabling the battery cell 20 to have higher structural strength and improved safety performance. Functional components such as electrode terminals 25 can be provided on the end cover 212. The electrode terminal 25 can be electrically connected to the electrode assembly 22 for outputting or inputting electrical energy from the battery cell 20. The material of the end cover 212 can also be various, such as copper, iron, aluminum, stainless steel, aluminum alloy, plastic, etc. The embodiments of the present disclosure do not make special limitations on this. In some embodiments, an insulating structure can also be provided on the inner side of the end cover 212, which can be used to isolate the electrical connection components inside the casing 211 from the end cover 212, so as to reduce the risk of short circuit. For example, insulating structure can be made of plastic, rubber, etc.

The electrode assembly 22 is a component in the battery cell 20 that undergoes electrochemical reactions. The casing 211 may contain one or more electrode assemblies 22. The electrode assembly 22 is mainly formed by winding or layering the positive and negative electrode plates, and usually has a separator between the positive and negative electrode plates. The separator is used for isolation of the positive and negative electrode plates to avoid internal short circuit between the positive and negative electrode plates. The parts of the positive and negative electrode plates that contain active substances form the main body of the cell assembly, and the parts of the positive and negative electrode plates that do not contain active substances each form the tabs 221. The positive and negative electrode tabs can be located at one end of the main body together or at both ends of the main body, respectively. During the charging and discharging process of the battery, the positive and negative active substances react with the electrolyte, and the tabs 211 are connected to the electrode terminals 25 to form a current circuit.

The electrode leading-out component 23 is a component used to lead out the electrical energy of the battery cell 20. The electrode leading-out component 23 is connected to the electrode terminal 25, and the busbar component 30 (see FIG. 2) is connected to the electrode leading-out component 23.

An insulating structure is arranged between the electrode leading-out component 23 and the end cover 212 to insulate and isolate the electrode leading-out component 23 from the end cover 212.

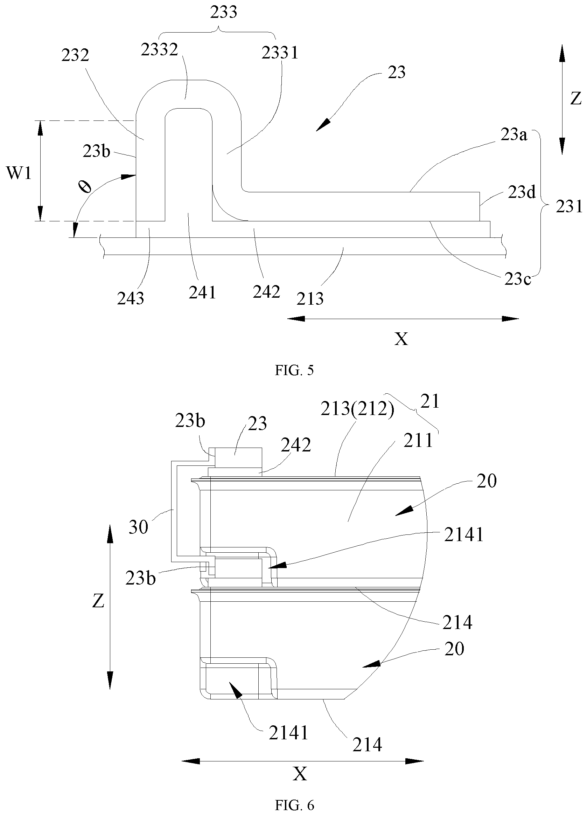

Referring FIG. 3, and further referring to FIG. 4, FIG. 4 is a stereogram of the electrode leading-out component provided in some embodiments of the present disclosure; and FIG. 5 is an assembly schematic view of the electrode leading-out component and the first wall provided in some embodiments of the present disclosure. According to some embodiments of the present disclosure, the present disclosure provides a battery cell 20, which includes a shell 21, an electrode assembly 22, and an electrode leading-out component 23. The shell 21 has a first wall 213, an electrode assembly 22 is arranged inside the shell 21, and an electrode leading-out component 23 is installed on the first wall 213. The electrode leading-out component 23 is used to lead out the electrical energy of the electrode assembly 22. The electrode leading-out component 23 includes a first surface 23b, the plane where the first surface 23b is located intersects with the first wall 213, and the first surface 23b is used to connect with the busbar component 30 (see FIG. 2).

The first wall 213 is one wall of the shell 21, and the first wall 213 and other walls together form an accommodating space of the shell 21. The electrode assembly 22 is arranged within this accommodating space.

In the figure, the direction indicated by the letter Z is the thickness direction of the first wall 213.

The first surface 23b is the surface of the electrode leading-out component 23 used for connecting with the busbar component 30. The plane where the first surface 23b is located intersects with the first wall 213, which can be that the plane where the first surface 23b is located is parallel to the thickness direction Z of the first wall 213, or the plane where the first surface 23b is located is inclined to the thickness direction Z of the first wall 213. For example, the angle θ between the plane where the first surface 23b is located and the first wall 213 is 60°~120°; preferably, the angle θ between the plane where the first surface 23b is located and the first wall 213 is 85°~95°; preferably, the plane where the first surface 23b is located can be perpendicular to the first wall 213, that is, the plane where the first surface 23b is located can be parallel to the thickness direction Z of the first wall 213, so as to facilitate the connection between the first surface 23b and the busbar component 30. The first surface 23b is the surface of the electrode leading-out component 23 closest to the edge of the first wall 213 in the length direction of the battery cell 20.

Referring to FIG. 6, the electrode leading-out component 23 can be in a block structure, and the first surface 23b of the electrode leading-out component 23 is used to connect with the busbar component 30.

According to the battery cell 20 of the embodiment of the present disclosure, the plane where the first surface 23b is located intersects with the first wall 213 to facilitate the welding of the busbar component 30 and the electrode leading-out component 23, thereby improving the assembly convenience of the busbar component 30 and the electrode leading-out component 23, and improving the assembly efficiency of the battery 100 composed of the battery cells 20. For example, when the plane where the first surface 23b is located is perpendicular to the first wall 213, the busbar component 30 and the electrode leading-out component 23 can be welded in a direction parallel to the first wall 213, thereby improving assembly convenience.

According to some embodiments of the present disclosure, the plane where the first surface 23b is located is perpendicular to the first wall 213.

It should be pointed out that the plane where the first surface 23b is located is perpendicular to the first wall 213, which refers to that the angle θ between the plane where the first surface 23b is located and the first wall 213 is approximately equal to 90°, for example, the angle θ can be between 85° and 95°, specifically, the angle θ can be 85°, 86°, 87°, 88°, 89°, 90°, 91°, 92°, 93°, 94°, or 95°.

According to some embodiments of the present disclosure, as shown in FIGS. 4 and 5, the electrode leading-out component 23 also includes a second surface 23a, wherein the plane of the second surface 23a intersects with the first surface 23b. The area of the second surface 23a is D1, and the area of the first surface 23b is D2, which meet 0.1 ≤ D2/D1 ≤ 10.

When there are grooves, through holes, or step holes on the second surface 23a, the area of the second surface 23a is the area of the second surface 23a by removing the part occupied by the grooves, through holes, or step holes.

The first surface 23b is a plane, and the area of the first surface 23b is the area of the plane. The first surface 23b is the surface used by the electrode leading-out component 23 to fit with the busbar component.

The ratio of the area D2 of the first surface 23b to the area D1 of the second surface 23a satisfies the above relationship, which can take into account both the energy density and overcurrent area of the battery 100. When D2/D1 is less than 0.1, if D2 is too small, the welding area between the busbar component 30 and the electrode leading-out component 23 is too small, which affects the overcurrent capacity; or if D1 is too large, the electrode leading-out component 23 will occupy too much area in the direction perpendicular to the thickness direction Z of the first wall 213, thereby occupying the space of the electrode assembly 22 and affecting the energy density. When 10<D2/D1, if D2 is too large, the space occupied by the electrode leading-out component 23 in the thickness direction Z of the first wall 213 is too large, which affects the energy density; or if D1 is too small, the connection area between the electrical connection components (such as electrode terminals) between the tab 221 and the electrode leading-out component 23, and the electrode leading-out component 23 is too small, which affects the overcurrent capacity.

The second surface 23a is the surface of the electrode leading-out component 23 located outside the shell 21, and protrudes from the first wall 213 along the thickness direction Z of the first wall 213.

According to some embodiments of the present disclosure, 0.5 ≤ D2/D1 ≤ 2.

When the ratio of the area D2 of the first surface 23b to the area D1 of the second surface 23a meets 0.5 ≤ D2/D1 ≤ 2, compared to 0.1 ≤ D2/D1 < 0.5 and 2 < D2/D1 ≤ 10, the welding area between the electrode leading-out component 23 and the busbar component 30, as well as the welding area between the electrode leading-out component 23 and the electrode terminal, can be further guaranteed. The overcurrent capacity is better, and the area occupied by the electrode leading-out component 23 is smaller, thereby resulting in a higher energy density of the battery 100.

According to some embodiments of the present disclosure, as shown in FIGS. 4 and 5, along the thickness direction Z of the first wall 213, the size of the first surface 23b is W1, which meets 1mm ≤ W1 ≤ 10mm, preferably 2mm ≤ W1 ≤ 5mm.

In the above solution, along the thickness direction Z of the first wall 213, the size W1 of the first surface 23b satisfies the above relationship, thereby allowing for a larger connection area between the first surface 23b and the busbar component 30, so as to facilitate the connection between the first surface 23b and the busbar component 30.

According to some embodiments of the present disclosure, as shown in FIGS. 4 and 5, the electrode leading-out component 23 also includes a second surface 23a, wherein the plane of the second surface 23a intersects with the first surface 23b; the electrode leading-out component 23 is arranged on the side of the first wall 213 that is away from the inside of the battery cell 20 (see FIG. 3); and the electrode leading-out component 23 includes a first part 231 and a second part 232, wherein the first part 231 is electrically connected to the tab 221 of the electrode assembly 22, the second part 232 is used to connect the busbar component 30 (see FIG. 2), the second surface 23a is the surface of the first part 231 away from the first wall 213, and the first surface 23b is the surface of the second part 232.

The first part 231 and the second part 232 are the two portions of the electrode leading-out component 23. The electrical connection is achieved between the electrode leading-out component 23 and the tab 221 and the busbar component 30 through the first part 231 and the second part 232.

In the above solution, the electrode leading-out component 23 is arranged on the side of the first wall 213 that is away from the inside of the battery cell 20, so as to facilitate the connection between the electrode leading-out component 23 and the busbar component 30. The first part 231 and second part 232 are respectively used to achieve the connection with the tab 221 and the busbar component 30, and the first part 231 and tab 221 can be connected via electrode terminal 25 (see FIG. 3), which is conducive to improving the connection area between the electrode leading-out component 23 and the electrode terminal 25, as well as the connection area between the electrode leading-out component 23 and the busbar component 30.

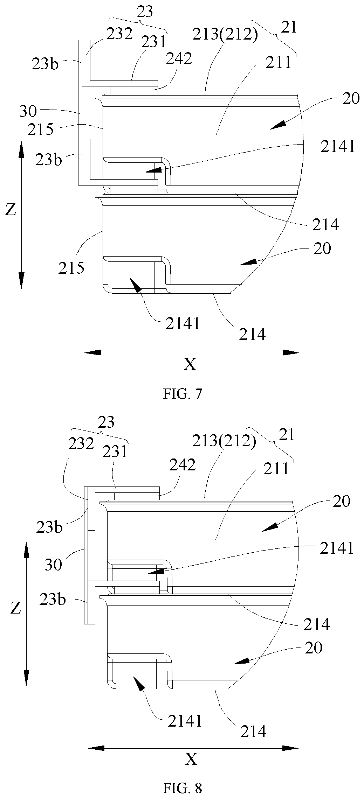

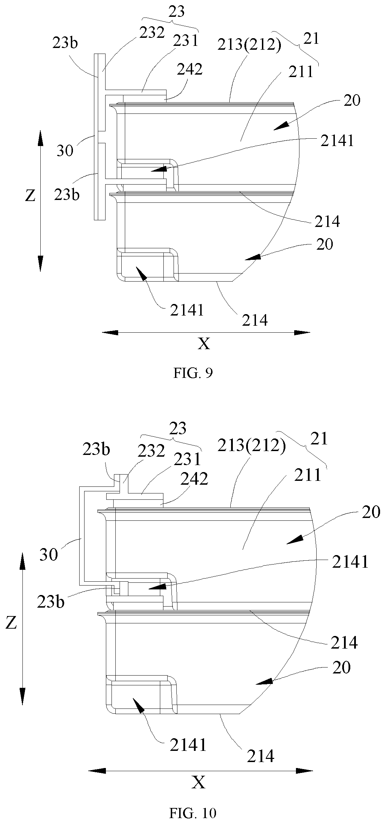

As shown in FIGS. 7 and 9, according to some embodiments of the present disclosure, the battery cell 20 further includes an electrode terminal 25. The first wall 213 is provided with an electrode leading-out hole 2131, one end of the electrode terminal 25 is connected to the first part 231, and the other end of the electrode terminal 25 is electrically connected to the tab 221 of the electrode assembly 22 through the electrode leading-out hole 2131.

The other end of the electrode terminal 25 can be electrically connected to the tab 221 of the electrode assembly 22 through the electrode leading-out hole 2131, which can be that the electrode terminal 25 can be passed through the electrode leading-out hole 2131, and the end of the electrode terminal 25 near the inside of the shell 21 is electrically connected to the tab 221 of the electrode assembly 22; or the adapter 26 is inserted into the electrode leading-out hole 2131, and the electrode terminal 25 is electrically connected to the tab 221 of the electrode assembly 22 through the adapter inserted into the electrode leading-out hole 2131.

The first part 231 is electrically connected to the tab 221 of the electrode assembly 22 through the electrode terminal 25 to guide the electrical energy of the electrode assembly 22 to the electrode leading-out component 23, so that the electrode leading-out component 23 leads out the electrical energy of the electrode assembly 22.

According to some embodiments of the present disclosure, as shown in FIGS. 4 and 5, at least part of the second part 232 extends beyond the first part 231 along the thickness direction Z of the first wall 231.

At least part of the second part 232 extends beyond the first part 231, which can be a part of the second part 232 extending beyond the first part 231, or the entire second part 232 extending beyond the first part 231.

The first part 231 can be perpendicular to the second part 232, that is, the angle between the first part 231 and the second part 232 can be 90°; or the first part 231 and the second part 232 can also be tilted to each other, and the angle between the first part 231 and the second part 232 can also be acute or obtuse.

Referring to FIG. 7, at least part of the second part 232 may extend beyond the first part 231 in various ways. For example, the second part 232 may be formed by extending from the first part 231 in a direction away from the first wall 213. At this time, the electrode leading-out component 23 is generally in a "L" shape. The horizontal section of "L" is the first part 231, and the vertical section of "L" is the second part 232.

Referring to FIG. 8, the second part 232 can also be formed by extending from the first part 231 towards the direction near the first wall 213. At this time, the electrode leading-out component 23 is generally in a "┌" shape. The horizontal section of "┌" is the first part 231, and the vertical section of "┌" is the second part 232. The first part 231 extends beyond the first wall 213 in the direction of the first part 231 near the second part 232, and the second part 232 extends from the part of the first part 231 that extends beyond the first wall 213 towards the direction of the first wall 213. At this time, the second part 232 is located on the outer side of the shell 21, thereby making it more convenient to connect to the busbar component.

As an example, referring to FIG. 8, in the direction perpendicular to the first surface 23b, the projection of the second part 232 partially overlaps with the projection of the casing 211, that is, the shell 21 includes the casing 211 and the end cover 212, and the first wall 213 is the end cover 212. In the thickness direction of the end cover 212, the second part 232 overlaps partially with the casing 211. The above solution can increase the size of the second part 232, thereby increasing the area of the first surface 23b, which is convenient for welding of busbar component 30.

Exemplary, the busbar component 30 is of a flat plate structure.

Referring to FIG. 9, the second part 232 can also be formed by extending from the first part 231 towards both the direction near the first wall 213 and the direction away from the first wall 213. At this time, the electrode leading-out component 23 is generally in a "├" shape. The horizontal section of "├" is the first part 231, and the vertical section of "├" is the second part 232. The second part 232 extends on the outer side of the shell 21, thereby making it more convenient to connect to the busbar component and having a larger weldable area on the first surface 23b.

As an example, referring to FIG. 9, in the direction perpendicular to the first surface 23b, the projection of the second part 232 overlaps partially with the projection of the casing 211, and in a direction pointing towards the electrode leading-out component 23 along the first wall 213, the second part 232 extends beyond the concave part 2141 of the battery cell 20 adjacent to the first wall 213. The above solution can increase the size of the second part 232, thereby increasing the area of the first surface 23b and facilitating the welding of the busbar component 30. Exemplary, the busbar component 30 is of a flat plate structure.

Referring to FIG. 10, for example, the second part 232 is formed by extending from the middle of the first part 231 towards the direction away from the first wall 213. At this time, the electrode leading-out component 23 is generally in a "┴" shape. The horizontal section of "┴" is the first part 231, and the vertical section of "┴" is the second part 232.

In the above solution, at least part of the second part 232 extends beyond the first part 231 along the thickness direction Z of the first wall 213, so as to increase the area of the first surface 23b, thereby facilitating the connection between the second part 232 and the busbar component 30 and increasing the connection area.

Referring to FIG. 7, according to some embodiments of the present disclosure, the electrode leading-out component 23 extends beyond the edge of the first wall 213, and the first surface 23b is located at the part of the electrode leading-out component 23 that extends beyond the first wall 213.

As shown in FIG. 7, a part of the electrode leading-out component 23 extends beyond the edge of the first wall 213. When observing in a direction perpendicular to the first wall 213, a portion of the projection of the electrode leading-out component 23 is located outside the first wall 213, and the projection of the first surface 23b does not overlap with the first wall 213 to facilitate the electrical connection between the electrode leading-out component 23 and the busbar component 30.

In this solution, the busbar component 30 can be a flat plate structure, and the structure of the busbar component 30 is simple for easy processing and manufacturing.

According to some embodiments of the present disclosure, the electrode leading-out component 23 includes a first part 231 and a second part 232, wherein the first part 231 is electrically connected to the tab 221 of the electrode assembly 22, the second part 232 is used to connect the busbar component 30, the second part 232 extends beyond the edge of the first wall 213, the second part 232 extends along the thickness direction Z of the first wall 213 and protrudes from the first part 231, and the first surface 23b is the surface of the second part 232 that is away from the first part 231.

The second part 232 and the first part 231 are arranged in a direction parallel to the first wall 213, and along the thickness direction Z of the first wall 213, the projection of the second part 232 does not overlap with the first wall 213.

As the second part 232 is used to connect the busbar component 30, the second part 232 extends beyond the edge of the first wall 213, and the first surface 23b is the surface of the second part 232 away from the first part 231, when the busbar component 30 is connected to the first surface 23b, the busbar component 30 can have a certain distance from the first wall 213, thereby reducing the risk of interference between the busbar component 30 and the first wall 213, and reducing the risk of short-circuit contact between the busbar component 30 and the shell 21, so as to facilitate the assembly of the busbar component 30 and the electrode leading-out component 23.

According to some embodiments of the present disclosure, as shown in FIGS. 4 and 5, the first part 231 and the second part 232 are arranged along the first direction X, the first surface 23b is the surface of the second part 232 that is away from the first part 231 along the first direction X, and the first direction X is perpendicular to the thickness direction Z of the first wall 213.

In the figure, the direction indicated by the letter X is the first direction, and the first direction X can be the length direction of the battery cell 20. When the first surface 23b is perpendicular to the first wall 213, the first direction X is perpendicular to the first surface 23b.

The first surface 23b is the surface of the electrode leading-out component 23 closest to the edge of the first wall 213 in the first direction X.

The second part 232 can be closer to the edge of the first wall 213 relative to the first part 231, so as to facilitate the connection between the busbar component 30 and the electrode leading-out component 23.

In the above solution, the first part 231 and second part 232 are arranged along the first direction X, and the first surface 23b is the surface of the second part 232 that is away from the first part 231 along the first direction X, thereby facilitating the assembly of the electrode leading-out component 23 and the busbar component 30.

According to some embodiments of the present disclosure, the first part 231 is parallel to the first wall 213.

The first part 231 is parallel to the first wall 213, that is, the thickness direction of the first part 231 is parallel to the thickness direction Z of the first wall 213. When the first wall 213 is a component having bump, the first part 231 is parallel to the flatter part with a larger area of the first wall 213. The first part 231 is parallel to the first wall 213, which also means that the first part 231 is set oppositely to the first wall 213, or that the largest surface of the first part 231 is set oppositely to the first wall 213, which does not mean that both surfaces of the first part 231 arranged along the thickness direction Z of the first wall 213 must be parallel to the first wall 213.

In the above solution, the first part 231 is parallel to the first wall 213, thereby facilitating the assembly of the first part 231.

According to some embodiments of the present disclosure, as shown in FIGS. 4 and 5, at least part of the second part 232 extends in a direction away from the first wall 213 and beyond the second surface 23a.

At least part of the second part 232 extends beyond the second surface 23a, which can be part of the second part 232 that extends beyond the second surface 23a, or the entire second part 232 that extends beyond the second surface 23a.

The second part 232 can be perpendicular to the plane where the second surface 23a is located, that is, the angle between the second part 232 and the second surface 23a can be 90°; or the second part 232 and the plane where the second surface 23a is located can also be tilted to each other, and the angle between the second part 232 and the plane where the second surface 23a is located can also be acute or obtuse.

In the above solution, at least part of the second part 232 extends beyond the second surface 23a along the thickness direction Z of the first wall 213, so that at least part of the second part 232 is located on the side of the second surface 23a away from the first wall 213, so as to reduce interference with the first wall 213 when the second part 232 is connected to the busbar component 30.

According to some embodiments of the present disclosure, as shown in FIGS. 4 and 5, the electrode leading-out component 23 further includes a third part 233, which connects the first part 231 and the second part 232.

The third part 233 is also a component of the electrode leading-out component 23. The third part 233 connects the first part 231 and the second part 232, which can be integrally formed with the first part 231 and the second part 232, or can be fixed to the first part 231 and the second part 232, for example, the third part 233 is welded to the first part 231 and the second part 232. Optionally, the first part 231, the third part 233, and the second part 232 are integrally formed, for example, the first part 231, the third part 233, and the second part 232 are stamped or bent into shape.

In the above solution, the third part 233 connects the first part 231 and second part 232, so that there can be a certain distance between the first part 231 and second part 232 to facilitate the connection between the electrode leading-out component 23 and the busbar component 30.

According to some embodiments of the present disclosure, as shown in FIGS. 4 and 5, the third part 233 includes a first section 2331 and a second section 2332. The first section 2331 extends from the first part 231 in a direction away from the first wall 213 (see FIG. 3), and the second section 2332 connects the first section 2331 and the second part 232, wherein a gap is provided between the first section 2331 and the second part 232.

The first section 2331 and the second section 2332 are two components of the third part 233. The first section 2331 extends from the first part 231 towards the direction of the first wall 213, that is, the first section 2331 is located on the side of the first part 231 away from the first wall 213. The second section 2332 connects the first section 2331 and the second part 232, and a gap is provided between the first section 2331 and the second part 232, that is, at least part of the second section 2332 is located between the first section 2331 and the second part 232.

In the above solution, a gap is provided between the first section 2331 and the second part 232 to facilitate the deformation of the electrode leading-out component 23 to absorb the expansion stress generated by the expansion of the battery cell 20.

According to some embodiments of the present disclosure, as shown in FIGS. 4 and 5, the second part 232 extends from the second section 2332 towards the direction near the first wall 213 (see FIG. 3), and the first section 2331, second section 2332, and second part 232 form a U-shaped structure.

The second part 232 extends from the second section 2332 towards the direction close to the first wall 213, such that the second part 232 can be parallel to the first section 2331, or the second part 232 can be inclined to the first section 2331. Optionally, the second part 232 is parallel to the first section 2331.

In the above solution, the first section 2331, the second section 2332, and the second part 232 form a U-shaped structure, which is simple in structure and easy to shape.

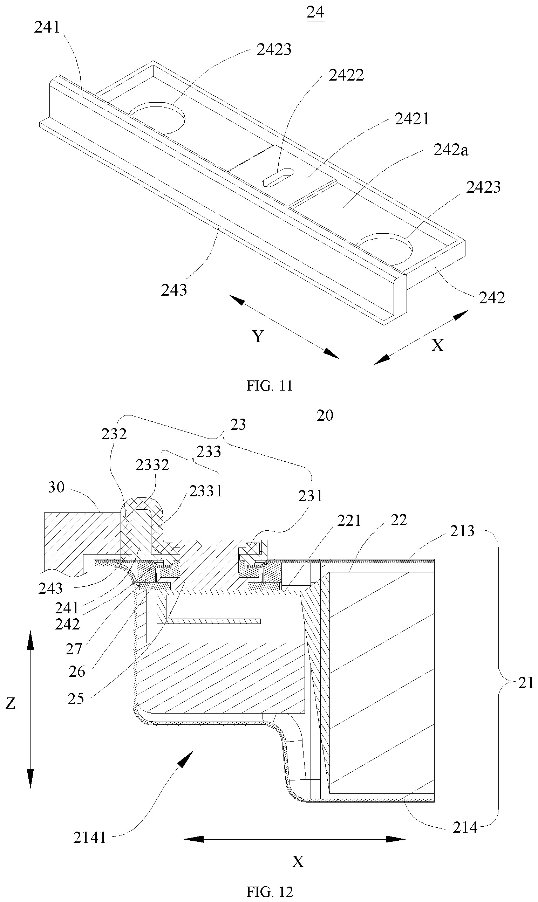

Referring to FIG. 3 and further referring to FIGS. 11 and 12, FIG. 11 is a structural schematic view of the support member, first insulating member, and second insulating member provided in some embodiments of the present disclosure; and FIG. 12 is a sectional view of partial structure of the battery cell provided in some embodiments of the present disclosure; According to some embodiments of the present disclosure, the battery cell 20 further includes a support member 241, which is inserted into the gap.

The support member 241 is inserted into the gap, and can support the second part 232 when the busbar component 30 is connected to the second part 232, thereby facilitating the connection between the second part 232 and the busbar component 30.

When the support member 241 is inserted into the gap, it can contact with the surface forming the gap of the first section 2331, or it can contact with the surface forming the gap of the second part 232, or it can contact with both the surface forming the gap of the first section 2331 and the surface forming the gap of the second part 232.

According to some embodiments of the present disclosure, the opposite two sides of the support member 241 contact with the first section 2331 and the second part 232, respectively.

As shown in FIG. 12, the two opposite sides of the support member 241 located in the gap are in contact with the surface forming the gap of the first section 2331 and the surface forming the gap of the second part 232, respectively. The support member 241 is in contact with the first section 2331 and the second part 232, and the support member 241 can play a limiting role in limiting the position and movement of the second part 232, so as to facilitate the stable connection between the second part 232 and the busbar component 30.

According to some embodiments of the present disclosure, the support member 241 is made of insulating material. Along the second direction Y, the support member 241 extends beyond both ends of the third part 233, and the second direction Y is perpendicular to the thickness direction Z of the first wall 213 and parallel to the first surface 23b.

In the figure, the direction indicated by the letter Y is the second direction, and the second direction Y can be the width direction of the battery cell 20.

The support member 241 can be made of plastic, rubber, etc.

The support member 241 is made of insulating material, and the support member 241 extends beyond the two ends of the third part 233 in the second direction Y, which has a good insulation effect.

According to some embodiments of the present disclosure, as shown in FIGS. 3, 11, and 12, the battery cell 20 further includes a first insulating member 242, with at least part of the first insulating member 242 arranged between the first wall 213 and the first part 231 to insulate and isolate the first wall 213 and the first part 231.

The first insulating member 242 can be made of plastic, rubber, or the like.

At least part of the first insulating member 242 is arranged between the first wall 213 and the first part 231, which can be that a portion of the first insulating member 242 is arranged between the first wall 213 and the first part 231, or the entire first insulating member 242 is arranged between the first wall 213 and the first part 231.

In the above solution, at least part of the first insulating member 242 is arranged between the first wall 213 and the first part 231 to separate the first wall 213 and the first part 231, thereby improving the safety of the battery cell 20.

According to some embodiments of the present disclosure, the support member 241 is connected to the first insulating member 242.

The support member 241 is connected to the first insulating member 242, which can be that the support member 241 is integrally formed with the first insulating member 242. For example, the support member 241 and the first insulating member 242 are subjected to thermoforming. Alternatively, the support member 241 can be snapped or bonded with the first insulating member 242.

In the above solution, the support member 241 is connected to the first insulating member 242, thereby ensuring stable connection between the support member 241 and the first insulating member 242, so as to facilitate the support member 241 supporting the second part 232.

According to some embodiments of the present disclosure, along the second direction Y, the first insulating member 242 extends beyond both ends of the first part 231, and the second direction Y is perpendicular to the thickness direction Z of the first wall 213 and parallel to the first surface 23b.

The first insulating member 242 extends beyond the two ends of the first part 231 in the second direction Y to achieve a good insulation effect between the first part 231 and the first wall 213.

According to some embodiments of the present disclosure, as shown in FIGS. 3, 11, and 12, the battery cell 20 also includes a second insulating member 243, at least partially set between the second part 232 and the first wall 213 to insulate and isolate the second part 232 from the first wall 213.

The second insulating member 243 can be made of plastic, rubber, or the like.

At least part of the second insulating member 243 is arranged between the second part 232 and the first wall 213, which can be that a portion of the second insulating member 243 is arranged between the second part 232 and the first wall 213, or the entire second insulating member 243 is arranged between the second part 232 and the first wall 213.

In the above solution, a second insulating member 243 is arranged between the second part 232 and the first wall 213 to insulate and isolate the second part 232 from the first wall 213, thereby improving the safety of the battery cell 20.

According to some embodiments of the present disclosure, the second insulating member 243 is connected to the first insulating member 242.

The second insulating member 243 is connected to the first insulating member 242, which can be that the second insulating member 243 is integrally formed with the first insulating member 242. For example, the second insulating member 243 and the first insulating member 242 are subjected to thermoforming. Alternatively, the second insulating member 243 can be snapped or bonded with the first insulating member 242.

In the above solution, the second insulating member 243 is connected to the first insulating member 242, such that the connection between the second insulating member 243 and the first insulating member 242 is stable. The two members can be formed integrally for easy assembly and positioning.

According to some embodiments of the present disclosure, the end of the second part 232 that is away from the second section 2332 abuts against the second insulating member 243.

The end of the second part 232 that is away from the second section 2332 abuts against the second insulating member 243, which can limit the movement of the second insulating member 243 along the thickness direction Z of the first wall 213.

According to some embodiments of the present disclosure, along the second direction Y, the second insulating member 243 extends beyond both ends of the second part 232, and the second direction Y is perpendicular to the thickness direction Z of the first wall 213 and parallel to the first surface 23b.

The second insulating member 243 extends beyond the two ends of the second part 232 in the second direction Y to achieve a good insulation effect between the second part 232 and the first wall 213.

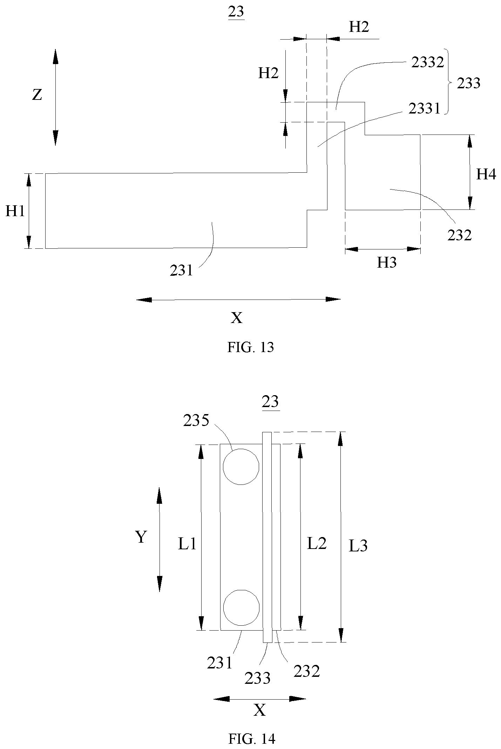

Referring to FIG. 13, FIG. 13 is a structural schematic view of the electrode leading-out component provided in some other embodiments of the present disclosure. According to some embodiments of the present disclosure, the thickness of the first part 231 is greater than the thickness of the third part 233, and/or the thickness of the second part 232 is greater than the thickness of the third part 233.

In the figure, the size indicated by the letter H1 is the thickness of the first part 231, the size indicated by the letter H2 is the thickness of the third part 233, and the size indicated by the letter H3 is the thickness of the second part 232.

When the electrode leading-out component 23 is unfolded, the thickness direction of the first part 231, the thickness direction of the second part 232, and the thickness direction of the third part 233 are all parallel to the thickness direction Z of the first wall 213. After the electrode leading-out component 23 is bent, the structure formed by the second part and third part 233 is U-shaped, so that the thickness direction of the third part 233 correspondingly changes.

It should be pointed out that the thickness of the first part 231 mentioned here refers to the thickness at positions where there are no structures such as grooves, through holes, or step holes in the first part 231.

In embodiments where the thickness of the first part 231 is greater than that of the third part 233, the thickness of the first part 231 is larger, such that the strength of the first part 231 can be enhanced, and the risk of welding through the first part 231 during the welding between the first part 231 and the electrical connection components (such as electrode terminals 25) between the tab 221 and the electrode leading-out component 23 can be reduced to meet the welding requirements.

In embodiments where the thickness of the second part 232 is greater than that of the third part 233, the thickness of the second part 232 is larger, such that the risk of welding through the second part 232 during welding between the second part 232 and the busbar component 30 can be reduced to meet the welding requirements.

In embodiments where the thickness of the first part 231 is greater than that of the third part 233, and the thickness of the second part 232 is greater than that of the third part 233, both the first part 231 and second part 232 have thicker thicknesses, which can meet welding requirements and reduce the risk of the first part 231 and second part 232 being welded through.

Referring to FIG. 13 and further referring to FIG. 14, FIG. 14 is a top view of FIG. 13; According to some embodiments of the present disclosure, the first part 231, the third part 233, and the second part 232 are arranged in sequence along the first direction X, wherein the size of the third part 233 along the second direction Y is greater than the size of the first part 231 along the second direction Y, and the size of the third part 233 along the second direction Y is greater than the size of the second part 232 along the second direction Y, wherein the first direction X, the second direction Y and the thickness direction Z of the first wall 213 are perpendicular to each other.

The first direction X is the arrangement direction of the first part 231, the third part 233, and the second part 232.

In the figure, the size indicated by the letter L1 is the size of the first part 231 along the second direction Y, the size indicated by the letter L3 is the size of the third part 233 along the second direction Y, and the size indicated by the letter L2 is the size of the second part 232 along the second direction Y.

In embodiments where the thickness of the first part 231 is greater than that of the third part 233, and/or the thickness of the second part 232 is greater than that of the third part 233, due to the smaller thickness of the third part 233, along the second direction Y, compared to the first part 231 and second part 232, the third part 233 has the largest size, which can enable the third part 233 to have a larger overcurrent area to meet the overcurrent demand.

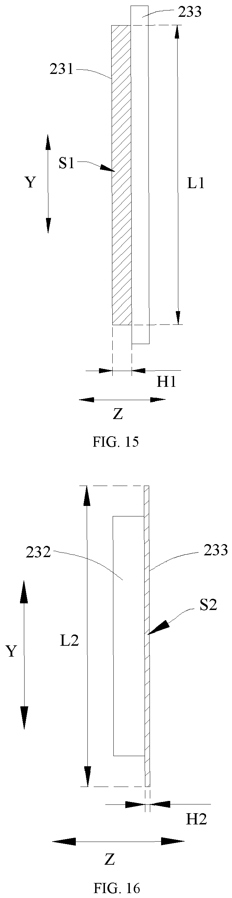

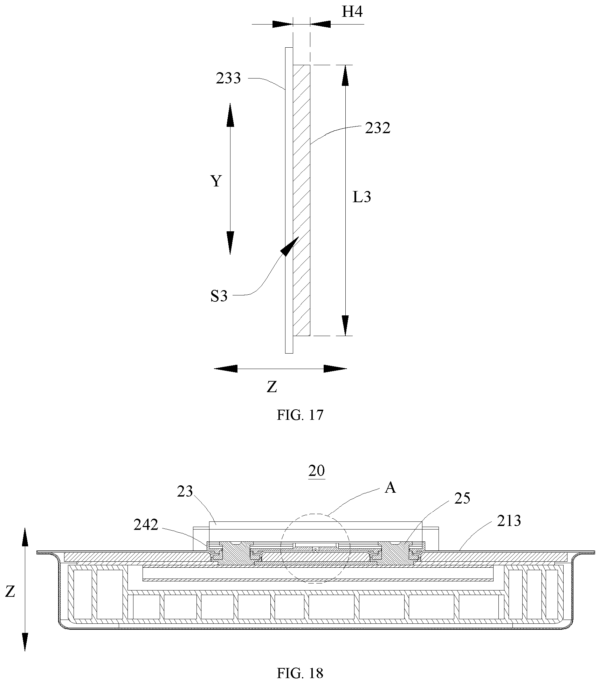

Referring to FIGS. 13 and 14 and further referring to FIGS. 15 to 17, FIG. 15 is a schematic view of the overcurrent section of the first part provided in some embodiments of the present disclosure; FIG. 16 is a schematic view of the overcurrent section of the third part provided in some embodiments of the present disclosure; and FIG. 17 is a schematic view of the overcurrent section of the second part provided in some embodiments of the present disclosure. According to some embodiments of the present disclosure, the overcurrent sectional area of the first part 231 is S1, the overcurrent sectional area of the third part 233 is S2, and the overcurrent sectional area of the second part 232 is S3, wherein 0.2 ≤ S1/S2 ≤ 5, 0.2 ≤ S2/S3 ≤ 5, 0.2 ≤ S1/S3 ≤ 5; preferably, 0.5 ≤ S1/S2 ≤ 2, 0.5 ≤ S2/S3 ≤ 2, and 0.5 ≤ S1/S3 ≤ 2.

Optionally, the ratio S1/S2 of the overcurrent sectional area S1 of the first part 231 to the overcurrent sectional area S2 of the third part 233 can be 0.2, 0.5, 1, 1.5, 2, 2.5, 3, 3.5, 4, 4.5, 5, etc.

Optionally, the ratio S2/S3 of the overcurrent sectional area S2 of the third part 233 to the overcurrent sectional area S3 of the second part 232 can be 0.2, 0.5, 1, 1.5, 2, 2.5, 3, 3.5, 4, 4.5, 5, etc.

Optionally, the ratio S1/S3 of the overcurrent sectional area S1 of the first part 231 to the overcurrent sectional area S3 of the second part 232 can be 0.2, 0.5, 1, 1.5, 2, 2.5, 3, 3.5, 4, 4.5, 5, etc.

S1=H1*L1, S2=H2*L2, S3=H4*L3. H4 is the dimension of the second part 232 in the direction parallel to the thickness direction Z of the first wall 213.

The overcurrent area S1 of the first part 231, the overcurrent area S2 of the second part 232, and the overcurrent area S3 of the third part 233 meet 0.2 ≤ S1/S2 ≤ 5, 0.2 ≤ S2/S3 ≤ 5, and 0.2 ≤ S1/S3 ≤ 5, thereby making the entire electrode leading-out component 23 have a better overcurrent capacity.

When 0.5 ≤ S1/S2 ≤ 2, 0.5 ≤ S2/S3 ≤ 2, and 0.5 ≤ S1/S3 ≤ 2, the overcurrent capacity of the electrode leading-out component 23 overall is better compared to 0.2 ≤ S1/S2 ≤ 5, 0.2 ≤ S2/S3 ≤ 5, and 0.2 ≤ S1/S3 ≤ 5.

According to some embodiments of the present disclosure, the thickness of the first part 231 is H1, meeting 0.2mm ≤ H1 ≤ 5mm, preferably 0.5mm ≤ H1 ≤ 4mm; or the thickness of the third part 233 is H2, meeting 0.2mm ≤ H2 ≤ 2mm, preferably 0.3mm ≤ H2 ≤ 1.2mm; or the thickness of the second part 232 is H3, meeting 0.2mm ≤ H3 ≤ 5mm, preferably 0.5mm ≤ H3 ≤ 4mm.

Optionally, the thickness H1 of the first part 231 can be 0.2mm, 0.25mm, 0.5mm, 0.75mm, 1mm, 1.25mm, 1.5mm, 1.75mm, 2mm, 2.25mm, 2.5mm, 2.75mm, 3mm, 3.25mm, 3.5mm, 3.75mm, 4mm, 4.25mm, 4.5mm, 4.75mm, 5mm, etc.

Optionally, the thickness H2 of the third part 233 can be 0.2mm, 0.3mm, 0.4mm, 0.5mm, 0.6mm, 0.7mm, 0.8mm, 0.9mm, 1mm, 1.1mm, 1.2mm, 1.3mm, 1.4mm, 1.5mm, 1.6mm, 1.7mm, 1.8mm, 1.9mm, 2mm, etc.

Optionally, the thickness H3 of the second part 232 can be 0.2mm, 0.25mm, 0.5mm, 0.75mm, 1mm, 1.25mm, 1.5mm, 1.75mm, 2mm, 2.25mm, 2.5mm, 2.75mm, 3mm, 3.25mm, 3.5mm, 3.75mm, 4mm, 4.25mm, 4.5mm, 4.75mm, 5mm, etc.

The thickness H1 of the first part 231 satisfies the above relationship, and under the condition that the first part 231 has better overcurrent capacity, the first part 231 is not easy to be welded through, so as to improve the assembly safety of the battery 100. The thickness H2 of the third part 233 satisfies the above relationship, which facilitates the bending of the third part 233 while making the third part 233 have a larger overcurrent area. The thickness H3 of the second part 232 satisfies the above relationship, and under the condition that the second part 232 has better overcurrent capacity, the second part 232 is not easy to be welded through, so as to improve the assembly safety of the battery 100.

Compared to 0.2mm ≤ H1 < 0.5mm, when 0.5mm ≤ H1 ≤ 4mm, the thickness H1 of the first part 231 is not easily welded through, and the battery 100 has higher safety during assembly. Compared to 4mm < H1 ≤ 5mm, when 0.5mm ≤ H1 ≤ 4mm, the first part 231 occupies less space in the thickness direction Z of the first wall 213, thereby resulting in a higher energy density for battery 100.

Compared to 0.2mm ≤ H2 < 0.3mm, when 0.3mm ≤ H2 ≤ 1.2mm, the thickness H2 of the third part 233 is thicker and less prone to breakage. Compared to 1.2mm<H2 ≤ 2mm, when 0.3mm ≤ H2 ≤ 1.2mm, the thickness H2 of the third part 233 is thinner and easier to bend, thereby making it easier for the third part 233 to bend.

Compared to 0.2mm ≤ H3 < 0.5mm, when 0.5mm ≤ H3 ≤ 4mm, the thickness H3 of the second part 232 is not easily welded through, and the battery 100 has higher safety during assembly. Compared to 4mm < H3 ≤ 5mm, when 0.5mm ≤ H3 ≤ 4mm, the second part 232 occupies less space in the direction perpendicular to the first surface 23b, thereby reducing costs.

Referring to FIGS. 3 and 12, according to some embodiments of the present disclosure, the battery cell 20 further includes an electrode terminal 25, and the first wall 213 is provided with an electrode leading-out hole 2131. The electrode terminal 25 passes through the electrode leading-out hole 2131, one end of the electrode terminal 25 is connected to the electrode leading-out component 23, and the other end of the electrode terminal 25 is electrically connected to the tab 221 of the electrode assembly 22.

The electrode terminal 25 is a conductive component, and it can be cylindrical for easy processing and manufacturing. Optionally, the electrode leading-out hole 2131 can be a circular hole.

In the embodiment where the electrode leading-out component 23 is located on the side of the first wall 213 away from the inside of the battery cell 20, the electrode terminal 25 is passed through the electrode leading-out hole 2131 to facilitate the connection between the electrode terminal 25 and the electrode leading-out component 23.

According to some embodiments of the present disclosure, as shown in FIGS. 3 and 4, the number of electrode terminals 25 and the number of electrode leading-out holes 2131 are both multiple, and the electrode terminals 25 correspond to the electrode leading-out holes 2131 one by one. The electrode leading-out component 23 is provided with a first groove 234, which is located between two adjacent electrode terminals 25.

Optionally, the number of electrode terminals 25 and the number of electrode leading-out holes 2131 are both two.

The first groove 234 is the concave part of the electrode leading-out component 23, which can reduce the weight of the electrode leading-out component 23.

The number of electrode terminals 25 and the number of electrode leading-out holes 2131 are both multiple, which has better overcurrent capacity. The first groove 234 can reduce the weight of the electrode leading-out component 23 without affecting overcurrent.

According to some embodiments of the present disclosure, as shown in FIG. 4, the first groove 234 extends to the edge of the electrode leading-out component 23.

The electrode leading-out component 23 includes a second surface 23a, a fifth surface 23c facing the first insulating member 242, and a side 23d. The second surface 23a is set away from the first wall 213, and the second surface 23a and fifth surface 23c are two surfaces of the electrode leading-out component 23 set oppositely to each other along the thickness direction Z of the first wall 213. The side 23d of the electrode leading-out component 23 is connected to the second surface 23a and the fifth surface 23c. The fifth surface 23c is concave towards the second surface 23a to form the first groove 234.

The first groove 234 extends to the edge of the electrode leading-out component 23, which means that the first groove 234 extends to the side 23d of the electrode leading-out component 23.

In the above solution, the first groove 234 extends to the edge of the electrode leading-out component 23 to facilitate the processing of the first groove 234 at the edge of the electrode leading-out component 23 and reduce the processing difficulty.

According to some embodiments of the present disclosure, the first groove 234 runs through the electrode leading-out component 23 along the thickness direction of the electrode leading-out component 23, thereby reducing the weight of the electrode leading-out component 23.

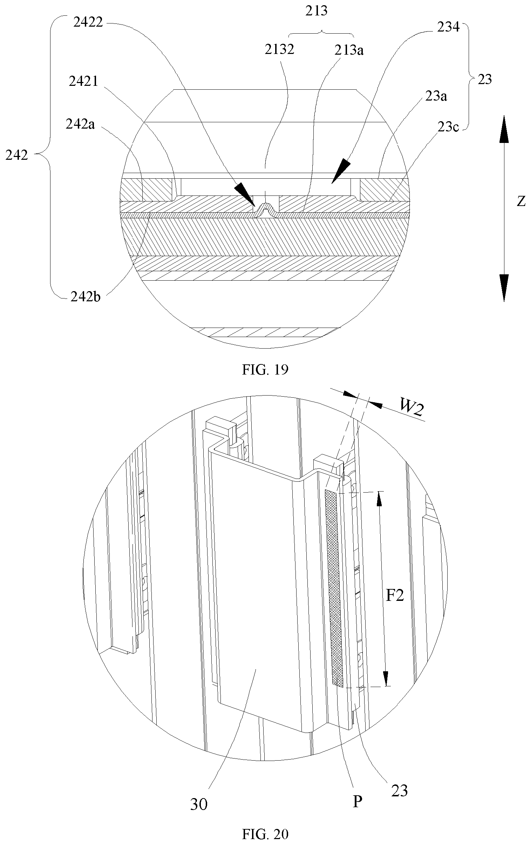

Referring to FIGS. 3 and 12, and further referring to FIGS. 18 and 19, FIG. 18 is a sectional view of the battery cell provided in some embodiments of the present disclosure; and FIG. 19 is a partial enlarged view of part A of FIG. 18. According to some embodiments of the present disclosure, the battery cell 20 further comprises a first insulating member 242, at least partially arranged between the first wall 213 and the electrode leading-out component 23 to insulate and isolate the first wall 213 from the electrode leading-out component 23. The first insulating member 242 includes a first protrusion 2421, which is inserted into the first groove 234.

The first insulating member 242 includes a sixth surface 242a facing away from the first wall 213 and a seventh surface 242b facing towards the first wall 213, with the first protrusion 2421 protruding from the sixth surface 242a.

In the above solution, the first wall 213 is insulated and isolated from the electrode leading-out component 23 by the first insulating member 242, so that the first wall 213 is separated from the electrode leading-out component 23. The first protrusion 2421 is inserted into the first groove 234 to facilitate the positioning of the electrode leading-out component 23.

According to some embodiments of the present disclosure, as shown in FIG. 19, the first wall 213 includes a third surface 213a that is away from the interior of the battery cell 20, and the third surface 213a has a second protrusion 2132 to enhance the strength of the first wall 213.

In some embodiments, the first insulating member 242 includes a second groove 2422, and the second protrusion 2132 is inserted into the second groove 2422.

The first wall 213 also includes a fourth surface facing the interior of the battery cell 20 (not shown in the figure), the third surface 213a and the fourth surface are two opposite surfaces in the thickness direction Z of the first wall 213, and the second protrusion 2132 protrudes from the third surface 213a.

The second groove 2422 is set on the seventh surface 242b.

In the above solution, the second protrusion 2132 is matched with the second groove 2422 to achieve the positioning for the first insulating member 242, thereby facilitating the assembly of the first insulating member 242 and the first wall 213. As shown in FIG. 16, the second groove 2422 can be a through hole.

The second groove 2422 and the first protrusion 2421 are correspondingly arranged in the thickness direction Z of the first wall 213 to make reasonable use of the space of the first insulating member 242.

According to some embodiments of the present disclosure, as shown in FIG. 12, the battery cell 20 also includes an adapter 26, and the electrode leading-out component 23 can be electrically connected to the tab 221 through the electrode terminal 25 and the adapter 26. For example, as shown in FIG. 12, the tab 221 is connected to the adapter 26, the adapter 26 is connected to the electrode terminal 25, and the electrode terminal 25 is connected to the electrode leading-out component 23, thereby achieving electrical connection between the tab 221 and the electrode leading-out component 23.

As shown in FIG. 12, the battery cell 20 also includes a third insulating member 27, which is located on the side of the first wall 213 facing the interior of the battery cell 20. The third insulating member 27 is located between the first wall 213 and the adapter 26 for insulation and isolation of the first wall 213 and the electrode terminal 25.

It is understandable that the battery cell 20 may not include the adapter 26, and in this case, the tab is connected to the electrode terminal.

According to some embodiments of the present disclosure, the shell 21 comprises a first wall 213 and a second wall 214 arranged oppositely in the thickness direction Z of the first wall 213, a third wall and a fourth wall arranged oppositely in the first direction X, and a fifth wall and a sixth wall arranged oppositely in the second direction Y, wherein the area of the third wall and the area of the fourth wall are both smaller than the area of the first wall 213, the area of the third wall and the area of the fourth wall are both smaller than the area of the second wall, the area of the fifth wall and the area of the sixth wall are both smaller than the area of the first wall 213, and the area of the fifth wall and the area of the sixth wall are both smaller than the area of the second wall 214, wherein the first direction, the second direction and the thickness direction of the first wall are perpendicular to each other.

In some embodiments, the first wall 213 is the wall with the largest area among all walls of the shell 21.

The battery cell 20 can be of cuboid, and the first wall 213 can be the wall with the largest area among all the walls of the battery cell 20. In other words, the large surface of the battery cell 20 is set as the first wall 213. The thickness direction Z of the first wall 213 can be the thickness direction of the battery cell 20.

It should be pointed out that in the above-mentioned wall, the area of the wall is that when viewed in a direction perpendicular to the wall, the projected area of the wall is the area of the wall.

According to some embodiments of the present disclosure, as shown in FIG. 3, the shell 21 includes a casing 211 and an end cover 212, the casing 211 has an opening, the end cover 212 closes the opening, and the first wall 213 is the end cover 212.

The first wall 213 is the end cover 212, which facilitates the assembly of the electrode leading-out component 23.

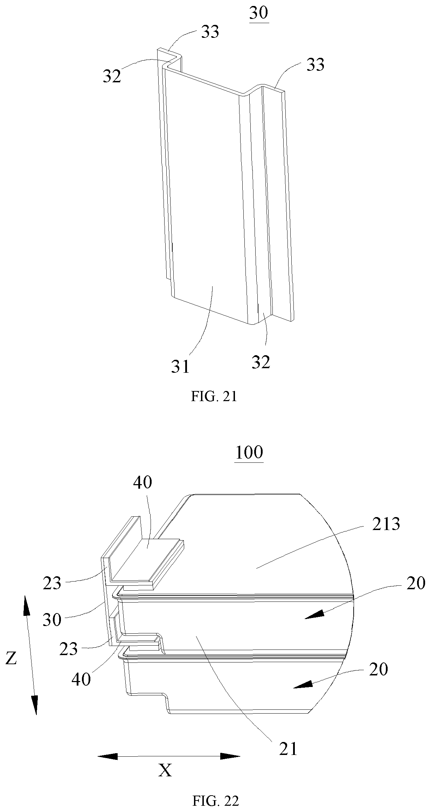

Referring to FIG. 2, and further referring to FIGS. 20 and 21, FIG. 20 is a partial enlarged view of part B of FIG. 2; and FIG. 21 is a structural schematic view of the reflow component provided in some embodiments of the present disclosure. According to some embodiments of the present disclosure, the present disclosure provides a battery 100, which includes a box 10, a busbar component 30, and multiple battery cells 20 as provided in the above embodiments. The busbar component 30 is accommodated within the box 10. Multiple battery cells 20 are accommodated within the box 10, and stacked along the thickness direction Z of the first wall 213. The electrode leading-out components 23 of the multiple battery cells 20 are electrically connected through the busbar component 30.

According to the battery 100 of the embodiment of the present disclosure, the use of the aforementioned battery cell 20 can improve the assembly efficiency of the electrode leading-out component 23 and busbar component 30 of the battery cell 20, thereby improving the assembly efficiency of the battery 100.

According to some embodiments of the present disclosure, in the thickness direction Z of the first wall 213, the projection of the end portion of the busbar component 30 overlaps at least partially with the first wall 213.

The projection of the end portion of the busbar component 30 overlaps at least partially with the first wall 213, so as to save assembly space, compact the structure of the internal components of the battery 100, and improve the energy density of the battery 100.

According to some embodiments of the present disclosure, as shown in FIG. 20, the electrode leading-out component 23 is welded to the busbar component 30 and forms a weld imprint area P, and along the thickness direction Z of the first wall 213, the size of the first surface 23b (see FIG. 4) is W1, and the size of the weld imprint area P is W2, satisfying 0.01 ≤ W2/W1 ≤ 0.5, preferably, 0.1 ≤ W2/W1 ≤ 0.3.

Optionally, the ratio W2/W1 between the size W2 of the weld imprint area P and the size W1 of the first surface 23b can be 0.01, 0.05, 0.1, 0.15, 0.2, 0.25, 0.3, 0.35, 0.4, 0.45, 0.5, etc.

The weld imprint area P is the area formed at the welding position between the electrode leading-out component 23 and the busbar component 30 after they are welded, so as to show the weld imprint.

The ratio of the size W2 of the weld imprint area P to the size W1 of the first surface 23b satisfies the above relationship, thereby resulting in better overcurrent capacity, and higher connection strength at the welding site, and better safety of the battery cell 20. If the ratio of the size W2 of the weld imprint area P to the size W1 of the first surface 23b is too small, it will result in poor overcurrent capacity and insufficient connection strength at the welding site. If the ratio of the size W2 of the weld imprint area P to the size W1 of the first surface 23b is too large, it may cause the local welding position to exceed the second part, thereby causing the local insulation structure to be melted, and impacting the assembly safety of the battery 100.

Compared to 0.01 ≤ W2/W1 < 0.1, when 0.1 ≤ W2/W1 ≤ 0.3, the welding site has better overcurrent capacity and higher connection strength. Compared to 0.3 < W2/W1 ≤ 0.5, when 0.1 ≤ W2/W1 ≤ 0.3, there is a larger overlap area between the welding site and the position where the electrode leading-out component 23 is connected to the tab 221, thereby making the assembly process of battery 100 have higher welding safety.

According to some embodiments of the present disclosure, along the second direction Y, the size of the first surface 23b (see FIG. 4) is F1, and the size of the weld imprint area P is F2, meeting 0.01 ≤ F2/F1 ≤ 0.5, preferably 0.1 ≤ F2/F1 ≤ 0.3, wherein the second direction Y is perpendicular to the thickness direction Z of the first wall 213 and parallel to the first surface 23b.

Optionally, the ratio F2/F1 between the size F2 of the weld imprint area P in the second direction Y and the size F1 of the first surface 23b in the second direction Y can be 0.01, 0.05, 0.1, 0.15, 0.2, 0.25, 0.3, 0.35, 0.4, 0.45, 0.5, etc.

The ratio of the size F2 of the weld imprint area P in the second direction Y to the size F1 of the first surface 23b in the second direction Y satisfies the above relationship, thereby resulting in better overcurrent capacity, and higher connection strength at the welding site, and better safety of the battery cell 20. If the ratio of the size F2 of the weld imprint area P in the second direction Y to the size F1 of the first surface 23b in the second direction Y is too small, it will result in poor overcurrent capacity and insufficient connection strength at the welding site. If the ratio of the size F2 of the weld imprint area P in the second direction Y to the size F1 of the first surface 23b in the second direction Y is too large, it may cause the local welding position to exceed the second part, thereby causing the local insulation structure to be melted, and impacting the assembly safety of the battery 100.

Compared to 0.01 ≤ F2/F1 < 0.1, when 0.1 ≤ F2/F1 ≤ 0.3, the welding site has better overcurrent capacity and higher connection strength. Compared to 0.3 < F2/F1 ≤ 0.5, when 0.1 ≤ F2/F1 ≤ 0.3, there is a larger overlap area between the welding site and the position where the electrode leading-out component 23 is connected to the tab 221, thereby making the assembly process of battery 100 have higher welding safety.

According to some embodiments of the present disclosure, the area of the first surface 23b is M1, and the area of the weld imprint area P is M2, meeting 0.01 ≤ M1/M2 ≤ 0.5, preferably 0.1 ≤ M1/M2 ≤ 0.3.

M1=W1*F1, M2=W2*F2.

Optionally, the ratio M1/M2 of the area M1 of the first surface 23b to the area M2 of the weld imprint area P can be 0.01, 0.05, 0.1, 0.15, 0.2, 0.25, 0.3, 0.35, 0.4, 0.45, 0.5, etc.

In the above solution, the ratio of the area M1 of the first surface 23b to the area M2 of the weld imprint area P satisfies the above relationship, such that the weld imprint part has better overcurrent capacity, and higher connection strength, and the battery cell 20 has better safety. If the ratio of the area M2 of the weld imprint area P to the area M1 of the first surface 23b is too small, it will result in poor overcurrent capacity and insufficient connection strength at the welding site. When laser welding is carried out between the busbar component 30 and the electrode leading-out component 23, if the ratio of the area M2 of the weld imprint area P to the area M1 of the first surface 23b is too large, it causes the local welding position to exceed the connection position between the electrode leading-out component 23 and the tab 221, thereby causing the local insulation structure to be melt and the laser to be leaked, and affecting the assembly safety of the battery 100.

Compared to 0.01 ≤ M2/M1 < 0.2, when 0.2 ≤ M2/M1 ≤ 0.3, the welding site has better overcurrent capacity and higher connection strength. Compared to 0.3 < M2/M1 ≤ 0.5, when 0.2 ≤ M2/M1 ≤ 0.3, there is a larger overlap area between the welding site and the position where the electrode leading-out component 23 is connected to the tab 221, thereby making the assembly process of battery 100 have higher welding safety.

According to some embodiments of the present disclosure, as shown in FIG. 21, the busbar component 30 comprises a bottom wall 31, two side walls 32, and two flanging parts 33, wherein the two side walls 32 are arranged oppositely along the thickness direction Z of the first wall 213, and the bottom wall 31 is connected to the two side walls 32; and each flanging part 33 extends from the end of the corresponding side wall 32 away from the bottom wall 31 to the direction away from the other side wall 32, and the two flanging parts 33 are respectively connected to the electrode leading-out components 23 of the two battery cells 20.

The two ends of the bottom wall 31 along the thickness direction Z of the first wall 213 are respectively connected to two side walls 32, and two flanging parts 33 are correspondingly arranged with two side walls 32.

The busbar component 30 is of a bent structure, which means that the bottom wall 31, two side walls 32, and two flanging parts 33 are formed integrally. The side wall 32 is bent relative to the bottom wall 31, and the flanging part 33 is bent relative to the side wall 32.

Multiple battery cells 20 include adjacent first battery cells and second battery cells, and a busbar component 30 is used to connect the electrode leading-out component 23 of the first battery cell and the electrode leading-out component 23 of the second battery cell. The busbar component 30 bypasses the side wall of the first battery cell parallel to the thickness direction Z of the first wall 213, so that one flanging part 33 of the busbar component 30 is connected to the electrode leading-out component 23 of the first battery cell, and the other flanging part 33 of the busbar component 30 is connected to the electrode leading-out component 23 of the second battery cell.

In the above solution, the structural form of the busbar component 30 facilitates the connection between the busbar component 30 and the first surfaces 23b of the electrode leading-out components 23 of two battery cells 20, so as to make the internal components of battery 100 compact in structure.

According to some embodiments of the present disclosure, as shown in FIG. 12, the shell 21 also has a second wall 214 opposite to the first wall 213, and the first area of the edge of the second wall 214 is recessed to form a concave part 2141. When multiple battery cells 20 are stacked, the concave part 2141 is used to accommodate at least a portion of the electrode leading-out components 23 of the battery cells 20 adjacent to the second wall 214.

The second wall 214 and the first wall 213 are the two walls of the shell 21 set oppositely to each other along the thickness direction Z of the first wall 213.

The first area is the edge area of the second wall 214, and along the thickness direction Z of the first wall 213, the first area corresponds to the area where the electrode leading-out component 23 is installed on the first wall 213. The first area forms a concave part 2141 by recessing towards the first wall 213 along the thickness direction Z of the first wall 213.

The electrode leading-out component 23 of the battery cell 20 adjacent to the second wall 214 may be partially located within the concave part 2141, or the electrode leading-out component 23 of the battery cell 20 adjacent to the second wall 214 may be entirely located within the concave part 2141.

In some embodiments, the depth of the concave part 2141 is greater than the height of the electrode leading-out component 23 protruding from the first wall 213. It can be understood that the electrode leading-out component 23 of the battery cell 20 adjacent to the second wall 214 can also be partially accommodated within the concave part 2141.

The surface of the second wall 214 can be provided with an insulation layer, so that when multiple battery cells 20 are stacked, the second wall 214 is insulated and isolated from the electrode leading-out components 23 of adjacent battery cells 20. The insulation layer can also be arranged on the surface of the electrode leading-out component 23 away from the first wall, so that when multiple battery cells 20 are stacked, the electrode leading-out component 23 can be insulated and isolated from the second wall 214 of the battery cells adjacent to the first wall 213.

In the above solution, when multiple battery cells 20 are stacked, the concave part 2141 is arranged to accommodate at least some of the electrode leading-out components 23 of the battery cells 20 adjacent to the second wall 214, thereby making reasonable use of the assembly space, so that the battery 100 has a higher energy density.

Referring to FIG. 7, according to some embodiments of the present disclosure, the busbar component 30 is in a flat plate structure.

In the embodiment where the electrode leading-out component 23 extends beyond the edge of the first wall 213, and the first surface 23b is located at the part where the electrode leading-out component 23 extends beyond the first wall 213, the busbar component 30 can be in a flat plate structure. The structure of the busbar component 30 is simple, convenient for processing and manufacturing, and has low manufacturing costs.

Referring to FIG. 7, according to some embodiments of the present disclosure, the electrode leading-out component 23 is at least partially accommodated in the concave part 2141 of the battery cell 20 adjacent to the first wall 213. The electrode leading-out component 23 includes the first part 231 and the second part 232, wherein the first part 231 is electrically connected to the tab 221 of the electrode assembly 22, the second part 232 is used to connect the busbar component 30, the second part 232 extends beyond the edge of the first wall 213, and the second part 232 extends along the thickness direction Z of the first wall 213 and protrudes from the first part 231. The first surface 23b is the surface of the second part 232 that is away from the first part 231, and in a direction pointing towards the electrode leading-out component 23 along the first wall 213, the second part 232 extends beyond the concave part 2141 of the battery cell 20 adjacent to the first wall 213.

The projection of the first surface 23b in a direction perpendicular to the first surface 23b is located outside the concave part 2141, so as to facilitate the connection between the busbar component 30 and the first surface 23b.

The second part 232 extends beyond the concave part 2141 of the adjacent battery cell 20, which means that the partially projection of the second part 232 is in the concave part 2141 when viewed in a direction perpendicular to the first surface 23b, and the other part of projection of the second part 232 is located outside the concave part 2141, along the thickness direction Z of the first wall 213, which is located on the side of the concave part 2141 away from the first wall 213 of the battery cell 20 opposite to the concave part 2141. For example, the battery cell 20 can have a third wall 215 and a fourth wall arranged oppositely to each other along the first direction X. Taking the third wall 215 as an example, when viewed in a direction perpendicular to the first surface 23b, a portion of the projection of the second part 232 falls into the concave part 2141, and another portion of the projection of the second part 232 overlaps with the third wall 215.

According to some embodiments of the present disclosure, referring to FIGS. 8 and 9, the shell 21 includes a casing 211 and an end cover 212. The casing 211 has an opening, and the end cover 212 closes the opening. The first wall is the end cover 212. In the direction perpendicular to the first surface 23b, the projection of the second part 232 partially overlaps with the projection of the casing 211.

When viewed in the direction perpendicular to the first surface 23b, the projection of the second part 232 overlaps partially with the casing 211, thereby resulting in a larger size of the second part 232 in the arrangement direction of the end cover 212 and the casing 211, thereby resulting in a larger area of the first surface 23b in the arrangement direction of the end cover 212 and the casing 211, so as to make a larger connection area between the busbar component 30 and the electrode leading-out component 23, and thus to firmly connect the busbar component 30 and the electrode leading-out component 23.

In the above solution, the first surface 23b is located outside the concave part 2141, and the first surface 23b extends beyond the concave part 2141 of the adjacent battery cell 20. The first surface 23b has a larger size in the thickness direction Z of the first wall 213, which facilitates a larger connection area between the electrode leading-out component 23 and the first surface 23b, thereby firmly connecting the electrode leading-out component 23 and the busbar component 30.

Referring to FIG. 22, according to some embodiments of the present disclosure, the battery 100 further comprises an isolation layer 40, which is provided on the surface of the electrode leading-out component 23 facing the shell 21. The isolation layer 40 is used to insulate and isolate the electrode leading-out component 23 from the shell 21.

The isolation layer 40 is an insulating component, which can be pasted on the surface of the electrode leading-out component 23 facing the shell 21 of the adjacent battery cell 20, or can be pasted on the surface of the electrode leading-out component 23 facing the shell 21 of the battery cell 20 provided with such electrode leading-out component 23. The material of isolation layer 40 can be plastic or rubber.

The isolation layer 40 can be set on one or more surfaces of the electrode leading-out component 23. The isolation layer 40 can be arranged in an L shape, and can be arranged on two adjacent surfaces of the electrode leading-out component 23.

In the above solution, the setting of the isolation layer 40 is used to insulate and isolate the electrode leading-out component 23 from the shell 21 of the adjacent battery cell 20, or the shell 21 of the battery cell 20 provided with the electrode leading-out component 23, so as to improve the safety of the battery 100.

According to some embodiments of the present disclosure, along the thickness direction Z of the first wall 213, the two adjacent electrode leading-out components 23 of the two adjacent battery cells 20 have two opposite end portions, and the two ends of the busbar component 30 are flush with the two end portions, respectively. One end of the busbar component 30 is flush with the end of the electrode leading-out component 23 of one of the two adjacent battery cells 20 that is close to the first wall 213, and the other end of the busbar component 30 is flush with the end of the electrode leading-out component 23 of the other of the two adjacent battery cells 20 that is away from the first wall 213.

In some embodiments, along the second direction Y, the two opposite ends of the busbar component 30 are flush with the two opposite ends of the electrode leading-out component 23, respectively, and the second direction Y, the thickness direction Z of the first wall 213 and the thickness direction of the busbar component 30 are perpendicular to each other.

The thickness direction of the busbar component 30 can be perpendicular to the first surface 23b.

For example, in the thickness direction Z of the first wall 213, one end of the busbar component 30 is flush with the end of the electrode leading-out component 23 of one battery cell 20 that is close to the first wall 213 of such battery cell 20, and the other end of the busbar component 30 is flush with the end of the electrode leading-out component 23 of the adjacent battery cell 20 that is away from the first wall 213 of such battery cell 20. In other words, the two ends of the busbar component 30 are flush with the two opposite ends of the two electrode leading-out components 23 of the two battery cells 20, respectively.

In the above solution, the two ends of the busbar component 30 in the thickness direction Z of the first wall 213 are respectively flush with the two opposite end portions of the electrode leading-out components 23 of the two adjacent battery cells 20, so as to facilitate the positioning of the busbar component 30 and the corresponding electrode leading-out component 23 in the thickness direction Z of the first wall 213, and to facilitate the connection between the busbar component 30 and the electrode leading-out component 23. The two opposite ends of the busbar component 30 along the second direction Y are respectively flush with the two opposite ends of the electrode leading-out component 23 along the second direction Y, so as to facilitate the positioning of the busbar component 30 and the corresponding electrode leading-out component 23 in the second direction Y, and to facilitate the connection between the busbar component 30 and the electrode leading-out component 23.

According to some embodiments of the present disclosure, the present disclosure also provides an electrical equipment, comprising a battery cell 20 provided in any of the above embodiments, which is used to provide electrical energy.

The electrical equipment can be any of the aforementioned devices or systems that use battery cell 20.

According to some embodiments of the present disclosure, referring to FIGS. 2 to 22, the present disclosure provides a battery cell 20, which is of a flat cuboid. The battery cell 20 includes a shell 21, an electrode assembly 22, an electrode leading-out component 23, an electrode terminal 25, support member 241, first insulating member 242, and second insulating member 243. The shell 21 includes a casing 211 and an end cover, wherein the casing 211 has an opening, the end cover closes the opening, the electrode assembly 22 is arranged inside the casing 211, and the end cover is the first wall 213. The tab 221 of electrode assembly 22 extends out from both ends of battery cell 20 in the length direction. The electrode leading-out component 23 is located on one side of the first wall 213 away from the interior of the battery cell 20. The first wall 213 is equipped with an electrode leading-out hole 2131, and the electrode terminal 25 is passed through the electrode leading-out hole 2131. One end of the electrode terminal 25 is electrically connected to the tab 221 through an adapter 26. The electrode leading-out component 23 includes the first part 231, the second part 232, and the third part 233. The first part 231, the third part 233, and the second part 232 are arranged in sequence along the first direction X. The third part 233 includes the first section 2331 and the second section 2332. The first section 2331 extends from the first part 231 in a direction away from the first wall 213, and the second section 2332 connects the first section 2331 and the second part 232. The second part 232 extends from the second section 2332 towards the direction near the first wall 213. The second part 232 is parallel to the first part 231, and there is a gap between the first section 2331 and the second part 232. The first section 2331, the second section 2332, and the second part 232 form a U-shaped structure. The first part 231 has a second surface 23a away from the bottom wall 31, the second part 232 has a first surface 23b that is away from the first part 231 along the first direction X, the first part 231 is parallel to the first wall 213, and along the thickness direction Z of the first wall 213, at least part of the second part 232 extends beyond the second surface 23a. The support member 241 is inserted into the gap. At least part of the first insulating member 242 is arranged between the first wall 213 and the first part 231 of the electrode leading-out component 23. At least part of the second insulating member 243 is arranged between the second part 232 and the first wall 213, and the second insulating member 243, the support member 241, and the first insulating member 242 are integrally formed. The end of the second part 232 that is away from the second section 2332 abuts against the second insulating member 243. The first insulating member 242 is equipped with a second through hole 2423 for matching with the electrode terminal 25. The electrode leading-out component 23 is equipped with a first through hole 235 for matching with the electrode terminal 25. The first through hole 235 extends from the fifth surface 23c to the second surface 23a along the thickness direction Z of the first wall 213. The other end of the electrode terminal 25 is inserted into the first through hole 235 through the second through hole 2423, and the electric terminal 25 is riveted to the electrode leading-out component 23. The first surface 23b is parallel to the thickness direction Z of the first wall 213, and the first surface 23b is used for welding with the busbar component 30.

According to the battery cell 20 of the embodiment of the present disclosure, the first surface 23b is parallel to the thickness direction Z of the first wall 213, so as to facilitate the welding of the busbar component 30 and the electrode leading-out component 23, and improve the assembly efficiency of the battery 100 composed of the battery cell 20.

Although the present disclosure has been described with reference to preferred embodiments, various improvements can be made thereto and components therein can be replaced with equivalents without departing from the scope of the present disclosure. Especially, as long as there is no structural conflict, the various technical features mentioned in various embodiments can be combined in any way. The present disclosure is not limited to the specific embodiments disclosed in the text, but includes all technical solutions falling within the scope of the claims.

## Claims

1. A battery cell, comprising:
a shell, comprising a first wall;
an electrode assembly, arranged inside the shell; and
an electrode leading-out component, mounted on the first wall, wherein the electrode leading-out component is configured to lead out an electrical energy of the electrode assembly, wherein
the electrode leading-out component comprises a first surface, a plane where the first surface is located intersects with the first wall, and the first surface is configured to connect with the busbar component.

2. The battery cell according to claim 1, wherein the electrode leading-out component further comprises a second surface, wherein a plane where the second surface is located intersects with the first surface; and an area of the second surface is D1, and an area of the first surface is D2, meeting 0.1 ≤ D2/D1 ≤ 10.

3. The battery cell according to claim 2, wherein 0.5≤D2/D1≤2.

4. The battery cell according to any one of claims 1-3, wherein along a thickness direction of the first wall, a size of the first surface is W1, which meets 1mm ≤ W1 ≤ 10mm, preferably 2mm ≤ W1 ≤ 5mm.

5. The battery cell according to any one of claims 1-4, wherein the electrode leading-out component further comprises a second surface, wherein a plane where the second surface is located intersects with the first surface; the electrode leading-out component is arranged on a side of the first wall that is away from an inside of the battery cell; and the electrode leading-out component comprises a first part and a second part, wherein the first part is electrically connected to a tab of the electrode assembly, the second part is configured to connect with the busbar component, the second surface is a surface of the first part away from the first wall, and the first surface is a surface of the second part.

6. The battery cell according to claim 5, wherein the battery cell further comprises:
an electrode terminal, wherein the first wall is provided with an electrode leading-out hole, one end of the electrode terminal is connected to the first part, and the other end is electrically connected to the tab of the electrode assembly through the electrode leading-out hole.

7. The battery cell according to claim 5 or 6, wherein at least part of the second part extends beyond the first part along the thickness direction of the first wall.

8. The battery cell according to any one of claims 5-7, wherein the first part and the second part are arranged in a first direction, and the first surface is a surface of the second part that is away from the first part along the first direction, wherein the first direction is perpendicular to the thickness direction of the first wall.

9. The battery cell according to any one of claims 5-8, wherein the first part is parallel to the first wall.

10. The battery cell according to any one of claims 5-9, wherein at least part of the second part extends in a direction away from the first wall and beyond the second surface.

11. The battery cell according to any one of claims 5-10, wherein the electrode leading-out component further comprises a third part, wherein the third part connects the first part and the second part.

12. The battery cell according to claim 11, wherein the third part comprises a first section and a second section, wherein the first section extends from the first part in a direction away from the first wall, the second section connects the first section and the second part, and a gap is provided between the first section and the second part.

13. The battery cell according to claim 12, wherein the second part extends from the second section towards a direction near the first wall, and the first section, the second section, and the second part form a U-shaped structure.

14. The battery cell according to claim 12 or 13, wherein the battery cell further comprises:
a support member, inserted into the gap.

15. The battery cell according to claim 14, wherein opposite two sides of the support member contact with the first section and the second part, respectively.

16. The battery cell according to claim 14, wherein the support member is made of an insulating material, and along a second direction, the support member extends beyond both ends of the third part, wherein the second direction is perpendicular to the thickness direction of the first wall and parallel to the first surface.

17. The battery cell according to any one of claims 14-16, wherein the battery cell further comprises:
a first insulating member, at least partially arranged between the first wall and the first part to insulate and isolate the first wall and the first part.

18. The battery cell according to claim 17, wherein the support member is connected to the first insulating member.

19. The battery cell according to claim 17 or 18, wherein along a second direction, the first insulating member extends beyond both ends of the first part, wherein the second direction is perpendicular to the thickness direction of the first wall and parallel to the first surface.

20. The battery cell according to any one of claims 17-19, wherein the battery cell further comprises:
a second insulating member, at least partially arranged between the second part and the first wall to insulate and isolate the second part from the first wall.

21. The battery cell according to claim 20, wherein the second insulating member is connected to the first insulating member.

22. The battery cell according to claim 20 or 21, wherein an end of the second part that is away from the second section abuts against the second insulating member.

23. The battery cell according to any one of claims 20-22, wherein along a second direction, the second insulating member extends beyond both ends of the second part, wherein the second direction is perpendicular to the thickness direction of the first wall and parallel to the first surface.

24. The battery cell according to any one of claims 11-23, wherein a thickness of the first part is greater than a thickness of the third part, and/or a thickness of the second part is greater than a thickness of the third part.

25. The battery cell according to claim 24, wherein the first part, the third part, and the second part are arranged in sequence along a first direction, wherein a size of the third part along a second direction is greater than a size of the first part along the second direction, and a size of the third part along the second direction is greater than a size of the second part along the second direction, wherein the first direction, the second direction and the thickness direction of the first wall are perpendicular to each other.

26. The battery cell according to claim 24 or 25, wherein an overcurrent sectional area of the first part is S1, an overcurrent sectional area of the third part is S2, and an overcurrent sectional area of the second part is S3, wherein
0.2 ≤ S1/S2 ≤ 5, 0.2 ≤ S2/S3 ≤ 5, and 0.2 ≤ S1/S3 ≤ 5; preferably, 0.5 ≤ S1/S2 ≤ 2, 0.5 ≤ S2/S3 ≤ 2, and 0.5 ≤ S1/S3 ≤ 2.

27. The battery cell according to any one of claims 11-26, wherein
a thickness of the first part is H1, meeting 0.2mm ≤ H1 ≤ 5mm, preferably 0.5mm ≤ H1 ≤ 4mm; or
a thickness of the third part is H2, meeting 0.2mm ≤ H2 ≤ 2mm, preferably 0.3mm ≤ H2 ≤ 1.2mm; or a thickness of the second part is H3, meeting 0.2mm ≤ H3 ≤ 5mm, preferably 0.5mm ≤ H3 ≤ 4mm.

28. The battery cell according to any one of claims 1-27, wherein the battery cell further comprises:
an electrode terminal, wherein the first wall is provided with an electrode leading-out hole, wherein the electrode terminal passes through the electrode leading-out hole, one end of the electrode terminal is connected to the electrode leading-out component, and the other end is electrically connected to a tab of the electrode assembly.

29. The battery cell according to claim 28, wherein the number of electrode terminals and the number of electrode leading-out holes are both multiple, and the electrode terminals correspond to the electrode leading-out holes one by one; and the electrode leading-out component is provided with a first groove, wherein the first groove is located between two adjacent electrode terminals.

30. The battery cell according to claim 29, wherein the first groove extends to an edge of the electrode leading-out component.

31. The battery cell according to claim 29 or 30, wherein the battery cell further comprises:
a first insulating member, at least partially arranged between the first wall and the electrode leading-out component to insulate and isolate the first wall and the electrode leading-out component, wherein the first insulating member comprises a first protrusion, and the first protrusion is inserted into the first groove.

32. The battery cell according to claim 31, wherein the first wall comprises a third surface that is away from an interior of the battery cell, wherein the third surface is provided with a second protrusion, the first insulating member comprises a second groove, and the second protrusion is inserted into the second groove.

33. The battery cell according to any one of claims 1-32, wherein the electrode leading-out component extends beyond an edge of the first wall, and the first surface is located at a part of the electrode leading-out component that extends beyond the first wall.

34. The battery cell according to claim 33, wherein the electrode leading-out component comprises a first part and a second part, wherein the first part is electrically connected to a tab of the electrode assembly, the second part is configured to connect with the busbar component, the second part extends beyond the edge of the first wall, the second part extends along the thickness direction of the first wall and protrudes from the first part, and the first surface is a surface of the second part that is away from the first part.

35. The battery cell according to any one of claims 1-34, wherein a plane where the first surface is located is perpendicular to the first wall.

36. The battery cell according to any one of claims 1-35, wherein the shell comprises the first wall and a second wall arranged oppositely in the thickness direction of the first wall, a third wall and a fourth wall arranged oppositely in a first direction, and a fifth wall and a sixth wall arranged oppositely in a second direction, wherein an area of the third wall and an area of the fourth wall are both smaller than an area of the first wall, the area of the third wall and the area of the fourth wall are both smaller than an area of the second wall, an area of the fifth wall and an area of the sixth wall are both smaller than the area of the first wall, and the area of the fifth wall and the area of the sixth wall are both smaller than the area of the second wall, wherein the thickness direction of the first wall, the first direction, and the second direction are perpendicular to each other.

37. The battery cell according to any one of claims 1-36, wherein the shell comprises a casing and an end cover, wherein the casing has an opening, the end cover closes the opening, and the first wall is the end cover.

38. A battery, comprising:
a box;
a busbar component, accommodated within the box; and
multiple battery cells according to any one of claims 1-37, accommodated within the box, wherein the multiple battery cells are stacked along the thickness direction of the first wall, and electrode leading-out components of the multiple battery cells are electrically connected through the busbar component.

39. The battery according to claim 38, wherein in the thickness direction of the first wall, a projection of an end portion of the busbar component overlaps at least partially with the first wall.

40. The battery according to claim 38 or 39, wherein the electrode leading-out component is welded to the busbar component to form a weld imprint area, wherein along the thickness direction of the first wall, a size of the first surface is W1, and a size of the weld imprint area is W2, meeting 0.01 ≤ W2/W1 ≤ 0.5, preferably 0.1 ≤ W2/W1 ≤ 0.3.

41. The battery according to claim 40, wherein along a second direction, a size of the first surface is F1, and a size of the weld imprint area is F2, meeting 0.01 ≤ F2/F1 ≤ 0.5, preferably 0.1 ≤ F2/F1 ≤ 0.3, wherein the second direction is perpendicular to the thickness direction of the first wall and parallel to the first surface.

42. The battery according to claim 40 or 41, wherein an area of the first surface is M1, and an area of the weld imprint area is M2, meeting 0.01 ≤ M1/M2 ≤ 0.5, preferably 0.1 ≤ M1/M2 ≤ 0.3.

43. The battery according to any one of claims 38-42, wherein the busbar component comprises a bottom wall, two side walls, and two flanging parts, wherein the two side walls are arranged oppositely along the thickness direction of the first wall, and the bottom wall is connected to the two side walls; and each flanging part extends from an end of a corresponding side wall away from the bottom wall to a direction away from the other side wall, and the two flanging parts are respectively connected to electrode leading-out components of two battery cells.

44. The battery according to claim 38, wherein the shell further has a second wall arranged oppositely to the first wall, and a first area of an edge of the second wall is recessed to form a concave part, wherein the concave part is configured to accommodate at least part of the electrode leading-out component of the battery cell adjacent to the second wall.

45. The battery according to claim 44, wherein the electrode leading-out component extends beyond an edge of the first wall, the first surface is located at a part of the electrode leading-out component that extends beyond the first wall, and the busbar component is in a flat plate structure.

46. The battery according to claim 45, wherein the electrode leading-out component is at least partially accommodated in the concave part of the battery cell adjacent to the first wall; the electrode leading-out component comprises a first part and a second part, wherein the first part is electrically connected to a tab of the electrode assembly, the second part is configured to connect with the busbar component, the second part extends beyond the edge of the first wall, the second part extends along the thickness direction of the first wall and protrudes from the first part, and the first surface is a surface of the second part that is away from the first part;
in a direction pointing towards the electrode leading-out component along the first wall, the second part extends beyond the concave part of the battery cell adjacent to the first wall; and/or
the shell comprises a casing and an end cover, wherein the shell has an opening, the end cover closes the opening, the first wall is the end cover, and in a direction perpendicular to the first surface, a projection of the second part partially overlaps with a projection of the casing.

47. The battery according to claim 46, wherein the battery further comprises an isolation layer, wherein the isolation layer is arranged on a surface of the electrode leading-out component facing the shell, wherein the isolation layer is configured to insulate and isolate the electrode leading-out component from the shell.

48. The battery according to claim 46 or 47, wherein along the thickness direction of the first wall, two adjacent electrode leading-out components of two adjacent battery cells have two opposite end portions, and two ends of the busbar component are flush with the two end portions, respectively; and/or
along a second direction, the two opposite ends of the busbar component are flush with the two opposite ends of the electrode leading-out components, respectively, and the second direction, the thickness direction of the first wall and a thickness direction of the busbar component are perpendicular to each other.

49. An electrical equipment, comprising the battery cell according to any one of claims 1-37, wherein the battery cell is configured to provide an electric energy.
